# EUROPEAN PATENT SPECIFICATION

(11) **EP 4 067 973 B1**
(45) Date of publication and mention of the grant of the patent: **12.02.2025**
(21) Application number: 20896603.6
(22) Date of filing: 24.11.2020
(51) Int. Cl.: G02B 27/01

(54) **HEAD-MOUNTED DEVICE**
KOPFMONTIERTE VORRICHTUNG
DISPOSITIF MONTÉ SUR LA TÊTE

(30) Priority: 06.12.2019 CN 201911244302
(43) Date of publication of application: 05.10.2022
(73) Proprietor: GUANGDONG OPPO MOBILE TELECOMMUNICATIONS CORP., LTD., Dongguan, Guangdong 523860 (CN)
(72) Inventor: WANG, Ruitian, Dongguan, Guangdong 523860 (CN); ZHU, Xinyu, Dongguan, Guangdong 523860 (CN)
(74) Representative: Manitz Finsterwald Patent- und Rechtsanwaltspartnerschaft mbB
(86) International application number: PCT/CN2020/131234
(87) International publication number: WO 2021/109906

(56) References cited:
- WO-A1-2018/023939
- WO-A1-2019/063706
- WO-A1-2019/182232
- CN-A- 106 353 888
- CN-A- 109 270 685
- CN-A- 109 298 527
- CN-A- 110 441 910
- CN-A- 110 824 715
- CN-A- 110 908 118
- CN-A- 110 955 051
- CN-A- 110 967 838
- CN-U- 207 817 306
- CN-U- 209 471 305
- US-A1- 2016 357 250
- US-A1- 2018 003 984
- US-A1- 2019 293 945
- US-A1- 2021 041 909
- US-A1- 2021 333 558
- US-B1- 6 239 771

## Description

### TECHNICAL FIELD

The present disclosure relates to the field of smart device technologies, and in particular to a head-mounted device, as e.g. described in documents WO 2019/182232 A1, US 2018/003984 A1 and WO 2018/023939 A1.

### BACKGROUND

Virtual reality (VR) and Augmented reality (AR) technologies can bring users a visual experience that is almost the same as the real scene and are currently popular research fields. To enable users to better experience the VR and AR technologies, head-mounted devices are usually adopted for displaying.

A head-mounted device is a wearable device that is worn on a user's head. After being worn, a display screen used for VR or AR display is disposed in front of the user's eyes. By displaying the corresponding content in the area corresponding to the left and right eyes of the user in the display screen in the head-mounted device, the user may experience the VR or AR display effect.

When the head-mounted device is worn with a strap, and during a tightness adjustment of the strap, it is necessary to adopt a special device. However, this device may cause the user to wear uncomfortable and unattractive appearance.

### SUMMARY OF THE DISCLOSURE

The present disclosure provides a head-mounted device, as set out in the appended set of claims.

When a user wears the head-mounted device, the strap assembly connects the host housing and the second housing together to form a wearable ring frame, the force receiving member is arranged obliquely on the forehead toward the second housing, and is in contact with the portion above the user's forehead, thus the force receiving member can stably support the head-mounted device, thus allowing the user to wear more comfortably.

### BRIEF DESCRIPTION OF THE DRAWINGS

To illustrate the technical solutions more clearly in the embodiments of the present disclosure, the following will be briefly described in the description of the embodiments required to use the attached drawings. It is obvious that the following description of the attached drawings are only some of the embodiments of the present disclosure, and those skilled in the art, without creative work, can also obtain other attached drawings based on these drawings.
FIG. 1 is a perspective assembly view of a head-mounted device according to an embodiment of the present disclosure.
FIG. 2 is an exploded perspective view of the head-mounted device in FIG. 1.
FIG. 3 is another exploded perspective view of the head-mounted device in FIG. 1.
FIG. 4 is a perspective assembly view of a strap assembly and a second housing assembly in FIG. 1.
FIG. 5 is a perspective assembly view of a first headband of the strap assembly in FIG. 4.
FIG. 6 is an exploded perspective view of the first headband in FIG. 5.
FIG. 7 is similar to FIG. 6, as another exploded perspective view of the first headband.
FIG. 8 is an enlarged view of an area A circumscribed in FIG. 2.
FIG. 9 is similar to FIG. 4, as a schematic view showing a mating relationship between a power source FPC in the strap assembly and related components of a second housing assembly.
FIG. 10 is a perspective assembly view of a second headband of the strap assembly in FIG. 4.
FIG. 11 is an exploded perspective view of the second headband in FIG. 10.
FIG. 12 is similar to FIG. 11, as another exploded perspective view of the second headband.
FIG. 13 is an enlarged view of an area B circumscribed in FIG. 3.
FIG. 14 is an exploded perspective view of a second housing assembly.
FIG. 15 is a perspective assembly view of a second housing assembly.
FIG. 16 is a perspective assembly view of a bottom-rear housing of the second housing assembly in FIG. 14, showing an assembly relationship with a battery.
FIG. 17 is a schematic view showing an assembly relationship between the bottom-rear housing and a power supply bracket in FIG. 16.
FIG. 18 is similar to FIG. 14, as another perspective view of a bottom-rear housing in FIG. 13.
FIG. 19 is a perspective enlarged view of the power supply bracket in FIG. 17.
FIG. 20 is a perspective view of a connecting member in FIG. 14.
FIG. 21 is a perspective exploded view of a tightness adjustment mechanism.
FIG. 22 is a perspective view of a first housing in FIG. 21.
FIG. 23 is a perspective exploded view of a pawl assembly in FIG. 21.
FIG. 24 is similar to FIG. 23, as another perspective exploded view of the pawl assembly in FIG. 21.
FIG. 25 is a partial assembly view of FIG. 24.
FIG. 26 is a perspective view of two pawls in FIG. 25.
FIG. 27 is a perspective view of an assembly of some elements of a pawl assembly and a first housing in FIG. 21.
FIG. 28 is a partial structural assembly view of a strap assembly and a tightness adjustment mechanism.
FIG. 29 is a perspective exploded view of a knob assembly in FIG. 21.
FIG. 30 is similar to FIG. 29, as another perspective exploded view of a knob assembly in FIG. 21.
FIG. 31 is similar to FIG. 28, as a partial structural assembly view of a strap assembly and a tightness adjustment mechanism.
FIG. 32 is a perspective view of a first force receiving member of a force receiving assembly in FIG. 1 from another angle.
FIG. 33 is an exploded view of a second force receiving member of a force receiving assembly and a bottom-front housing of a second housing assembly in FIG. 1.
FIG. 34 is an exploded perspective view of the second force receiving member in FIG. 33.

### DETAILED DESCRIPTION

The technical solutions in the embodiments of the present disclosure will be clearly and completely described below in conjunction with the accompanying drawings in the embodiments of the present disclosure. Obviously, the described embodiments are only a part of the embodiments of the present disclosure, and not all of them. Based on the embodiments in the present disclosure, all other embodiments obtained by those skilled in the art without making creative labor fall within the scope of the present disclosure.

Mentioning "embodiments" herein means that a specific feature, structure, or characteristic described in conjunction with the embodiments may be included in at least one embodiment of the present disclosure. The appearance of the phrase in various places in the specification does not necessarily refer to the same embodiment, nor is it an independent or alternative embodiment mutually exclusive with other embodiments. Those skilled in the art clearly and implicitly understand that the embodiments described herein can be combined with other embodiments.

It is to be noted that the terms "first", "second", etc. in this article are only intended for descriptive purposes and cannot be understood as indicating or implying relative importance or implicitly indicating the number of indicated technical features. Therefore, the features defined with "first" and "second" may explicitly or implicitly include one or more of the features.

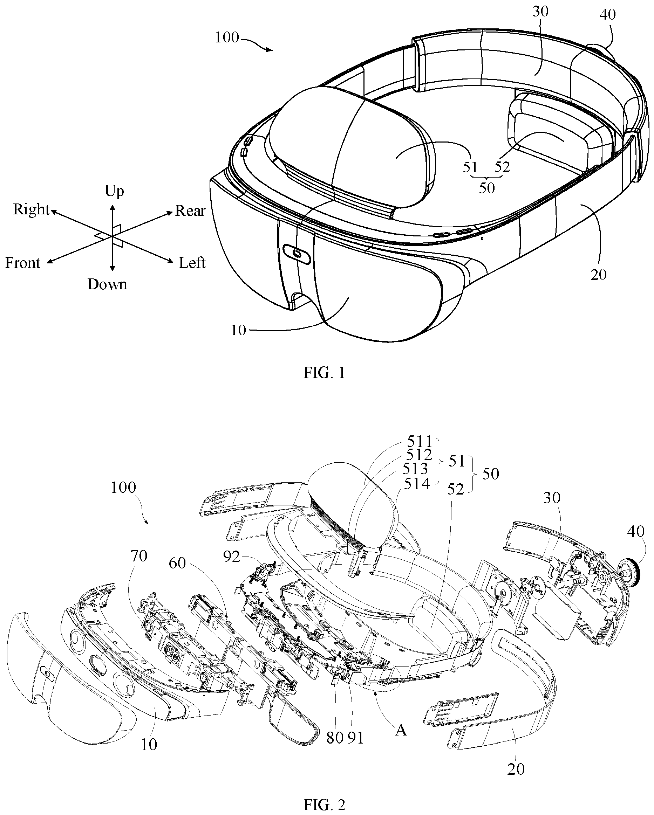

Referring to FIG. 1, the head-mounted device 100 of the embodiment of the present disclosure may include a first housing assembly 10, a strap assembly 20 connected to both ends of the first housing assembly 10, a tightness adjustment mechanism 40 connected to the strap assembly 20, a second housing assembly 30 arranged on the strap assembly 20 and opposite to the first housing assembly 10, and a force receiving assembly 50 arranged on the first housing assembly 10 and the second housing assembly 30. The first housing assembly 10, the strap assembly 20, and the second housing assembly 30 may form a frame with adjustable tightness, such that the head-mounted device 100 may be worn on a user's head. The force receiving assembly 50 is arranged on upper and lower sides of the frame to share the weight of the head-mounted device 100 borne by the user's head.

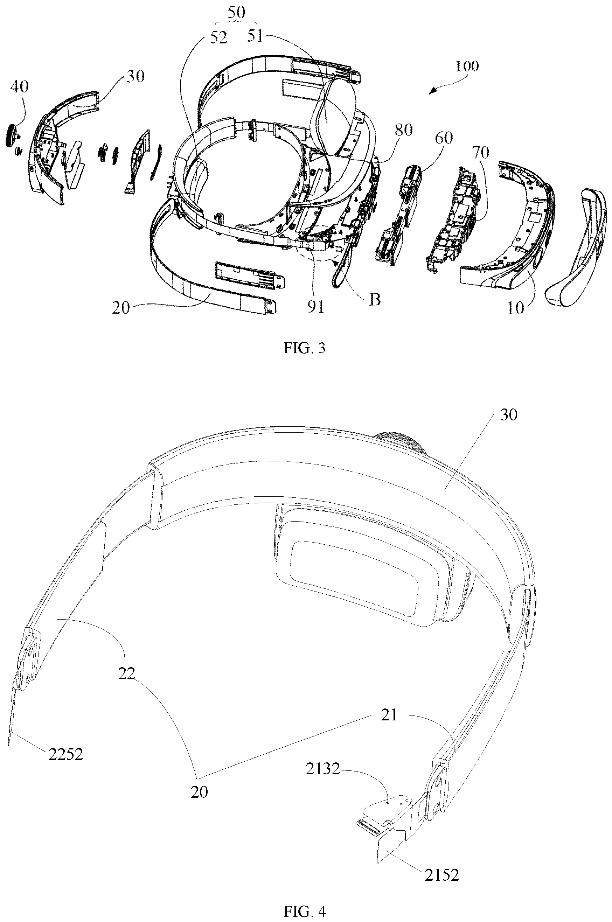

Further referring to FIGS. 2 and 3, the head-mounted device 100 may further include a host received in the first housing assembly 10. The host may include an opto-mechanical assembly 60, a camera assembly 70, a main board 80, and a speaker assembly 91, a microphone assembly 92, etc. Since the first housing assembly 10 is configured to receive and protect the host, the first housing assembly 10 may also be referred to as a host housing or a protective housing. The first housing assembly 10 and the host contained therein may constitute a host assembly. The head-mounted device 100 may be VR glasses, AR glasses, or the like. In the embodiments of the present disclosure, AR glasses are taken as an example for description.

In the example of AR glasses, the head-mounted device 100 may be configured to transmit data to and receive data from an external processing device through a signal connection, and the signal connection may be a wired connection, a wireless connection, or a combination thereof. However, in other situations, the head-mounted device 100 may be configured as a stand-alone device, that is, data processing is performed on the head-mounted device 100 itself. The signal connection may be configured to carry any kind of data, such as image data (e.g., still images and/or full motion video, including 2D and 3D images), audio, multimedia, voice, and/or any other type of data. The external processing device may be, for example, a game console, a personal computer, a tablet computer, a smart phone, or other types of processing devices. The signal connection may be, for example, a universal serial bus (USB) connection, Wi-Fi connection, Bluetooth, or Bluetooth low energy (BLE) connection, Ethernet connection, cable connection, DSL connection, cellular connection (e.g., 3G, LTE/4G or 5G) etc., or a combination thereof. Additionally, the external processing device may communicate with one or more other external processing devices via a network. The network may be or include, for example, a local area network (LAN), a wide area network (WAN), an intranet, a metropolitan area network (MAN), the global Internet, or a combination thereof.

The first housing assembly 10 of the head-mounted device 100 may be arranged with a display assembly, an optical device, a sensor, a processor, etc. In the example of AR glasses, the display assembly is designed to, for example, overlay an image on the user's view of a real-world environment by projecting light into the user's eyes. The head-mounted device 100 may further include an environmental light sensor and an electronic circuit system to control at least some of the aforementioned components and perform associated data processing functions. The electronic circuit system may include, for example, one or more processors and one or more memories.

### Strap assembly 20

Referring to FIG. 4, which is a perspective assembly view of the strap assembly 20 and the second housing assembly 30 according to an embodiment of the present disclosure. The strap assembly 20 may include two headbands, that is, a first headband 21 and a second headband 22.

Referring to FIGS. 1 and 4, an end of the first headband 21 is connected to a corresponding end of the first housing assembly 10, and the other end of the first headband 21 extends from a corresponding end of the second housing assembly 30 and is connected to tightness adjustment mechanism 40. The second headband 22 may be arranged in a similar manner as the first headband 21.

### First headband 21 of strap assembly 20

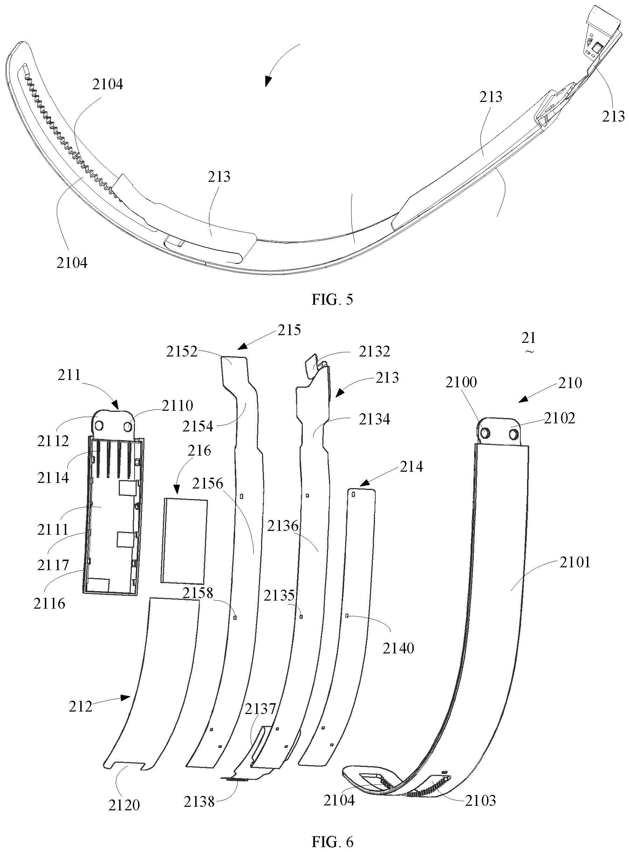

Referring to FIGS. 5 and 6, which are a perspective assembly view and an exploded view of the first headband 21 according to an embodiment of the present disclosure. The first headband 21 may include a first headband body 210, a first headband cover 211 buckled together with the first headband body 210; and a first flexible strip 212, a power source FPC 213, a protective sheet 214, and a first heat sink 215 that are pressed between the first headband body 210 and the first headband cover 211.

The first headband body 210 may be made of a flexible material and be bent arbitrarily, substantially in the shape of an elongated strip. The first headband body 210 may include a first body portion 2101 and a first mounting portion 2102 extending from an end of the first body portion 2101.

The first body portion 2101 has a uniform width and defines a length adjustment hole 2103 at an end away from the first mounting portion 2102. The length adjustment hole 2103 is a strip-shaped through hole. The first body portion 2101 is arranged with first serrations 2104 extending along a length direction of the length adjustment hole 2103 to cooperate with the tightness adjustment mechanism 40.

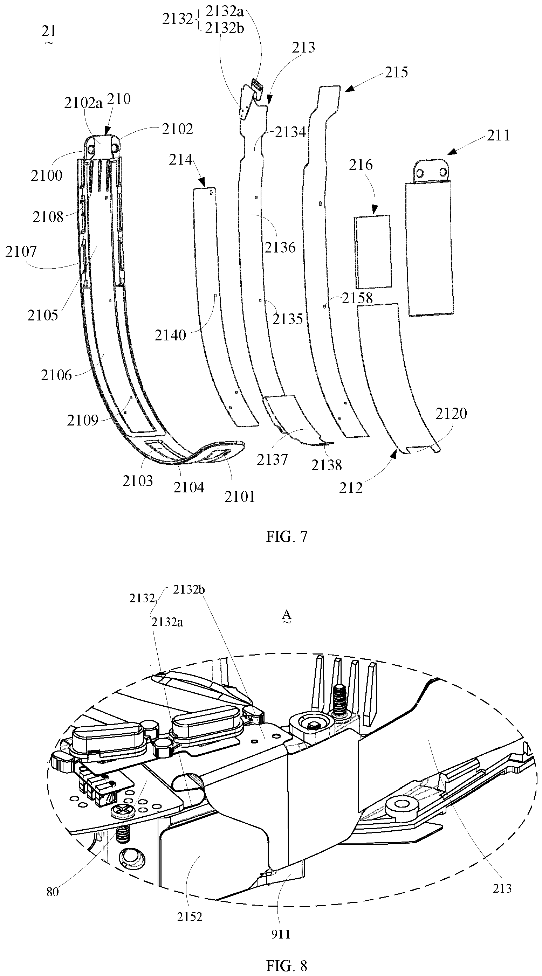

Referring to FIG. 7, which is a perspective exploded view of the first headband 21 of the embodiment of the present disclosure from another perspective. The first body portion 2101 may define a groove in the shape of an elongated strip, which has the same shape as the first headband 21, on a side pressed against the first headband cover 211. The groove may be divided into two, namely, a first groove 2105 and a second groove 2106 connected to the first groove 2105. The depth of the first groove 2105 is the same as the depth of the second groove 2106, while the width of the first groove 2105 is greater than the width of the second groove 2106. The groove extends from a position adjacent to the length adjustment hole 2103 to a position adjacent to the first mounting portion 2102. The second groove 2106 is a stepped groove, and an outermost stepped groove thereof may be configured to receive the first flexible strip 212. The first body portion 2101 is arranged with a first connecting member 2107 on two side edges of the first groove 2105. **In** some embodiments, the first connecting member 2107 is a plurality of evenly arranged hooks. The first body portion 2101 is arranged with a first fixing portion 2108 in the first groove 2105. The first fixing portion 2108 may be a plurality of convex ribs with gradually changing thickness, and a top surface of each convex rib is inclined. An end of the convex ribs abuts against the first mounting portion 2102.

A plurality of first limiting posts 2109 are arranged in the groove of the first body portion 2101 to fix the power source FPC 213, the protective sheet 214, and the first heat sink 215.

The first mounting portion 2102 defines two first connecting holes 2100. A recess 2102a is defined between the two first connecting holes 2100.

Referring to FIG. 6, the first headband cover 211 may be made of a hard material, configured to buckle with the first headband body 210 on a side of the first headband body 210 close to the first mounting portion 2102 and compress an end of the first flexible strip 212 near the first mounting portion 2102.

The first headband cover 211 may include a first body 2111 and a first assembly portion 2112 extending from an end of the first body 2111 away from the first flexible strip 212.

The first body 2111 has a uniform width and a shape corresponding to the first body portion 2101, except that the length is shorter than that of the first body portion 2101. Two side edges of the first body 2111 in a width direction respectively extend toward the first body portion 2101 to form first side walls 2116. The two first side walls 2116 are arranged with second connecting members 2117 on the opposite inner surfaces of the two first side walls 2116. The second connecting members 2117 cooperate with the first connecting members 2107 to fix the first headband cover 211 and the first headband body 210. The first body 2111 may be arranged with a second fixing portion 2114 at an end connected to the first assembly portion 2112. When the first headband cover 211 is buckled with the first headband body 210, the first fixing portion 2108 of the first headband body 210 cooperates with the second fixing portion 2114 of the first headband cover 211 to compress and fix the power source FPC 213 and the first heat sink 215 between the first headband body 210 and the first headband cover 211. The second fixing portion 2114 may be similar in structure to the first fixing portion 2108, and it may also be a plurality of convex ribs with gradually changing thickness. A top surface of each convex rib is inclined, and an end of the convex ribs abuts the first assembly portion 2112.

The first assembly portion 2112 has the same shape as the first mounting portion 2102 and defines a second connecting hole 2110. When the first assembly portion 2112 is attached to the first mounting portion 2102, the first connecting hole 2100 is aligned and communicated with the second connecting hole 2110, forming a through hole at the recess 2102a.

The first flexible strip 212 is made of a flexible material and can be bent arbitrarily, substantially in the shape of an elongated strip. The material of the first flexible strip 212 may be the same as that of the first headband body 210. The first flexible strip 212 may be adhered to the second groove 2106 on the first headband body 210 by means of gluing or the like, making an outer surface of the first flexible strip 212 flush with an outer surface of the first headband body 210, that is, a surface close to the user's head. A gap 2120 is defined at an end of the first flexible strip 212. When the first flexible strip 212 is adhered to the second groove 2106, the first flexible strip 212 and the first headband body 210 jointly define a first through hole at the gap 2120 to communicate with the second groove 2106 for the power source FPC 213 to pass through.

Referring to FIGS. 5, 6 and 7, the shape of the power source FPC 213 is adapted to the first headband body 210, but the length thereof is greater than that of the first headband body 210 with both ends of the power source FPC 213 extending beyond both ends of the first headband body 210. The power source FPC 213 may include a first electrical connection portion 2132 extending into the first housing assembly 10 and connected to the main board 80 and/or the microphone assembly 92, a power source FPC neck 2134 stuck in the through hole and connected to the first electrical connection portion 2132, a power source FPC body 2136 fixed in the first and second grooves 2105, 2106, a movable portion 2137 arranged outside the second groove 2106 and penetrating the first through hole, and a second electrical connection portion 2138 arranged at an end of the movable portion 2137 and connected to a battery 35.

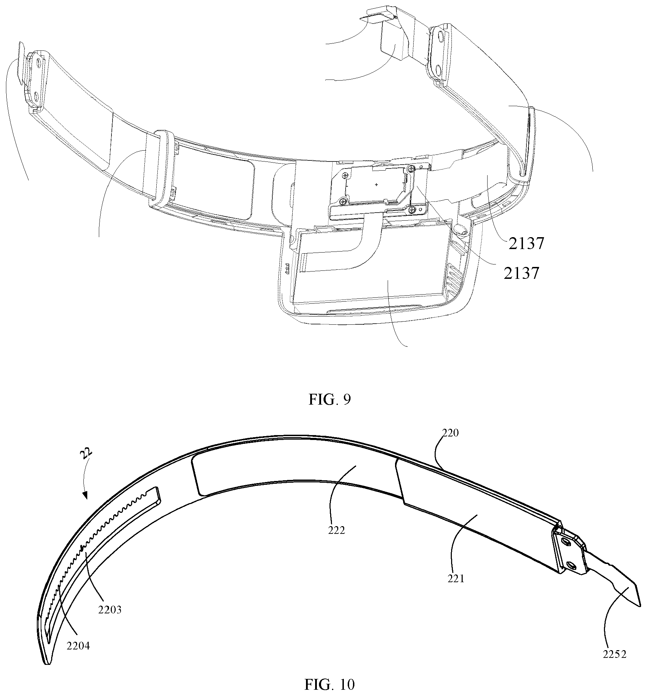

Referring to FIG. 8, which is a partial enlarged view of the area A in FIG. 2, showing a schematic view of a connection between the first electrical connection portion 2132 and circuit components when the strap assembly 20 extends into the first housing assembly 10. Among them, the first electrical connection portion 2132 includes a wiring portion 2132a connected to the main board 80 and a wiring portion 2132b connected to the microphone assembly 92. The wiring portion 2132a and the second electrical connection portion 2138 are both plug-in ports and are connected by plug-in connections. For example, as shown in FIG. 8, the main board 80 is plug-in-connected to the wiring portion 2132a. For example, as shown in FIG. 9, the second electrical connection portion 2138 is plug-in-connected to the battery 35.

Referring again to FIGS. 6 and 7, the width of the power source FPC neck 2134 is less than power source FPC parts on its adjacent sides, such as the power source FPC body 2136. Referring to FIG. 4, it can be seen that the power source FPC neck 2134 is stuck right in the first through hole, preventing the power source FPC 213 from loosening.

Referring to FIGS. 6 and 7, the power source FPC body 2136 defines a first jack 2135. When the power source FPC body 2136 is placed in the first and second grooves 2105, 2106, a first limiting post 2109 is arranged in the first jack 2135 to fix the power source FPC body 2136.

The shape of the protective sheet 214 is adapted to the first and second grooves 2105, 2106 to be received in the two grooves, for example, in an innermost stepped groove of the second groove 2106 and the first groove 2105. The protective sheet 214 defines a plurality of second jacks 2140, and the protective sheet 214 is fixed by placing the first limiting post 2109 in the second jack 2140. The protective sheet 214 is received in the first and second grooves 2105 and 2106 to directly contact the first body portion 2101, preventing the power source FPC body 2136 from directly contacting the first body portion 2101.

The shape of the first heat sink 215 is similar to that of the power source FPC 213. The first heat sink 215 is arranged between the first headband cover 211 and the power source FPC 213 and may include a first attachment portion 2152 extending into the first housing assembly 10, a first heat sink neck 2154 stuck in the through hole and connected to the first attachment portion 2152, and a first heat sink body 2156 fixed in the first groove 2105 and the second groove 2106. For example, as shown in FIG. 8, the first attachment portion 2152 is attached to a side wall of a speaker body 9132 in the speaker assembly 91.

The width of the first heat sink neck 2154 is less than that of heat sink parts on both sides, such as the first heat sink body 2156. Referring to FIG. 4, it can be seen that the first heat sink neck 2154 is stuck right in the through hole to prevent the first heat sink 215 from loosening. The first heat sink body 2156 defines a third jack 2158. When the first heat sink body 2156 is placed in the first and second grooves 2105, 2106, the first limiting post 2109 is arranged in the third jack 2158 for fixing the first heat sink body 2156. The first fixing portion 2108 cooperates with the second fixing portion 2114 to press on the first heat sink body 2156 between the first headband body 210 and the first headband cover 211 to compress and fix the first heat sink body 2156.

A filler 216 may be arranged between the first heat sink 215 and the first headband cover 211. The filler 216 may be foam to fill a space between the first headband cover 211 and the first headband body 210; or may be a thermally conductive material to improve the heat conduction effect of the first heat sink 215.

During the assembling process of the first headband 21, referring to FIGS. 6 and 7, the protective sheet 214, the power source FPC 213, and the first heat sink 215 are stacked in sequence to make the second jack 2140, the first jack 2135, and the third jack 2158 aligned in sequence, and are placed in the first and second grooves 2105, 2106 of the first headband body 210, such that the first limiting post 2109 passes through the second jack 2140, the first jack 2135, and the third jack 2158; the first flexible strip 212 is embedded and covered on the outermost stepped groove of the second groove 2106, which may be bonded by glue, such that the first flexible strip 212 and the first body portion 2101 of the first headband body 210 define the first through hole at the gap 2120, and the movable portion 2137 of the power source FPC 213 passes through the first through hole; the power source FPC neck 2134 and the first heat sink neck 2154 of the power source FPC 213 are placed in the recess 2102a; the filler 216 is placed on the first body 2111 of the first headband cover 211, and the first headband cover 211 is buckled on the first headband body 210, such that the first connecting member 2107 and the second connecting member 2117 are connected, and the first mounting portion 2102 is buckled with the first assembly portion 2112 to form a connecting portion to be connected with the corresponding end of the first housing assembly 10; the assembly of the first headband 21 is completed.

It can be understood that the first headband cover 211 is buckled on the first headband body 210, cooperating with a corresponding portion of the first headband body 210 to define an accommodating cavity. Specifically, the first body portion 2101 is buckled with the first headband cover 211 at the first groove 2105 to form the accommodating cavity. The accommodating cavity may receive the protective sheet 214, the power source FPC 213, the first heat sink 215, and the filler 216. The second groove 2106 communicates with the accommodating cavity.

### Second headband 22 of strap assembly 20

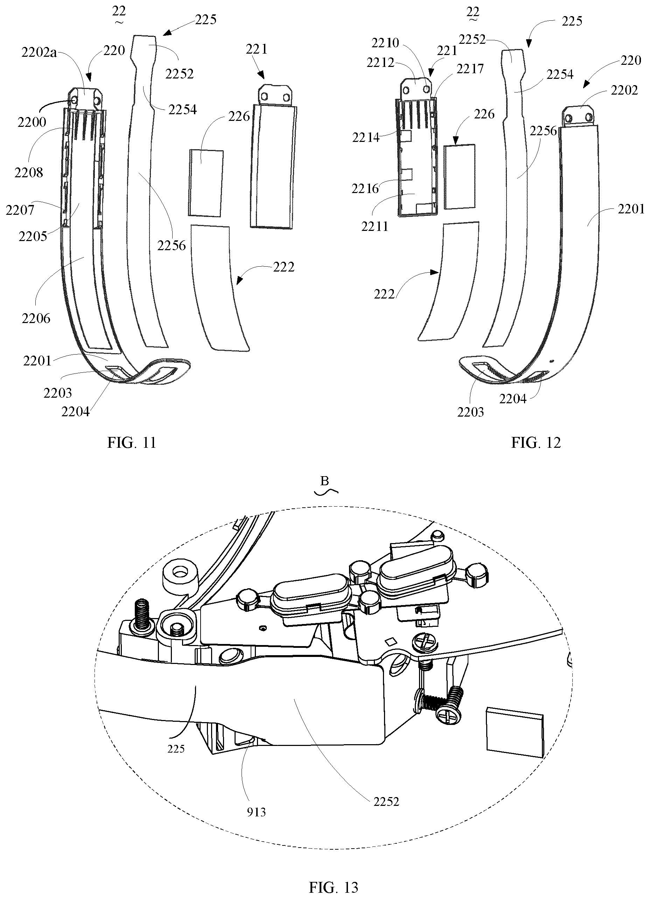

Referring to FIG. 10 and FIG. 11, which are a perspective assembly view and an exploded view of the second headband 22 according to the embodiment of the present disclosure. The second headband 22 is similar to the first headband 21, and the difference between the two is that the second headband 22 is not arranged with a power source FPC and a protective sheet therefor. The second headband 22 may include a second headband body 220, a second headband cover 221, a second flexible strip 222 pressed between the second headband body 220 and the second headband cover 221, and a second heat sink 225. The structure of the second headband body 220 is substantially the same as that of the first headband body 210. Reference may be made to FIG. 11 for details, where only the main components are listed, and the specific cooperation relationship and functions are referred to the introduction of the first headband body 210. The second headband body 220 may include a second body portion 2201 and a second mounting portion 2202. The second body portion 2201 has a length adjustment hole 2203, second serrations 2204, a first groove 2205, and a second groove 2206. A first connecting member 2207 is arranged on both sides of the first groove 2205, and a first fixing portion 2208 is arranged at a position of the first groove 2205 adjacent to the second mounting portion 2202. Two first connecting holes 2200 are defined on the second mounting portion 2202, and a recess 2202a is defined between the two first connecting holes 2200.

Referring to FIG. 12, FIG. 12 is a perspective exploded view of the second headband 22 of the embodiment of the present disclosure from another perspective. The second headband cover 221 and the first headband cover 211 are substantially the same in structure, will not be detailed here, and only the main components are listed. For the specific cooperation relationship and function thereof, reference may be made to the introduction of the first headband cover 211. The second headband cover 221 may include a second body 2211 and a second assembly portion 2212. The second body 2211 has a second fixing portion 2214, a second side wall 2216 and a second connecting member 2217. The second assembly portion 2212 defines two second connecting holes 2210.

The second flexible strip 222 is made of a flexible material and can be bent arbitrarily, substantially in the shape of an elongated strip. The material of the second flexible strip 222 may be the same as that of the second headband body 220. The material of the second flexible strip 222 may be adhered to the second headband body 220 by means of gluing or the like, making an outer surface of the second flexible strip 222 flush with an outer surface of the second headband body 220, that is, a surface close to the user's head.

The second heat sink 225 has substantially the same structure as the first heat sink 215 and may include a second attachment portion 2252 extending into the first housing assembly 10, a second heat sink neck 2254 stuck in the through hole and connected to the second attachment portion 2252, and a second heat sink body 2256 fixed in the first groove 2205 and the second groove 2206. As shown in FIG. 13, the second attachment portion 2252 is attached to a side wall of the speaker body 9132 in the speaker assembly 91.

The width of the second heat sink neck 2254 is less than that of heat sink parts on both sides, such as the second heat sink body 2256. Referring to FIG. 4, it can be seen that the second heat sink neck 2254 is stuck right in the through hole to prevent the second heat sink 225 from loosening.

When the second heat sink body 2256 is placed in the first and second grooves 2205 and 2206, the first fixing portion 2208 cooperates with the second fixing portion 2214 to fix the second heat sink body 2256 arranged between the second headband body 220 and the second headband cover 221.

The second headband cover 221 is arranged with a filler 226 in an area where the second connecting member 2217 is disposed, and the filler 226 is placed between the second heat sink 225 and the second headband cover 221. The filler 226 may be foam to fill a space between the second headband cover 221 and the second headband body 220; or may be a thermally conductive material to improve the heat conduction effect of the second heat sink 225.

During the assembling process of the second headband 22, referring to FIGS. 11-12, the second heat sink 225 is placed in the first groove 2205 and the second groove 2206 within the second headband body 220, and the second flexible strip 222 is embedded and covered on an outermost stepped groove of the second groove 2206, which may be bonded by glue; the second heat sink neck 2254 is placed in the recess 2202a; the second filler 226 is placed on the second headband cover 221, and the second headband cover 221 is buckled on the second headband body 220, such that the first connecting member 2207 and the second connecting member 2217 are connected, and the second mounting portion 2202 is buckled with the second assembly portion 2212 to form a connecting portion to be connected with the corresponding end of the first housing assembly 10; the assembly of the second headband 22 is completed.

It can be understood that the second headband cover 221 is buckled on the second headband body 220, cooperating with a corresponding portion of the second headband body 220 to define an accommodating cavity. The second heat sink 225 and the filler 226 may be accommodated in the accommodating cavity; the second groove 2206 communicates with the accommodating cavity.

The assembling relationship between the strap assembly 20 and the first housing assembly 10 is specifically introduced as follows:

Referring to FIGS. 1 and 3, during the assembling process of the first headband 21 to the first housing assembly 10, the first housing assembly 10 is connected to a connecting portion on the first headband 21, such as through the first and second connecting holes 2100, 2110.

For the positional relationship and connection relationship of the first heat sink 215, the second heat sink 225, and the power source FPC 213 inside the first housing assembly 10, reference may be made to FIGS. 2, 3, 8, and 13; the wiring portion 2132a of the power source FPC 213 is connected to the PCB on the main board 80, such as by means of welding; the wiring portion 2132b of the power source FPC 213 is connected to a first microphone in the microphone assembly 92, such as by means of welding; the first heat sink 215 extends into the first housing assembly 10, and the first attachment portion 2152 is attached to the outer side wall of the speaker body 9112 of the speaker assembly 91. The second heat sink 225 extends into the first housing assembly 10, and the second attachment portion 2252 thereof is attached to the outer side wall of the speaker body 9132 of the speaker assembly 91.

It should be noted that the connection of the first headband 21, the second headband 22, and the first housing assembly 10 is not limited to the above-mentioned connection method. Any form of connecting member is sufficient as long as it can connect the strap assembly 20 to the first housing assembly 10.

The number, structure, and position of the heat sink, power supply FPC 213, protective sheet 214, and filler filled in the first headband 21 and the second headband 22 may be adjusted according to the actual situation. For example, the first headband 21 and the second headband 22 may be adjusted to be filled with the heat sink, power supply FPC 213, protection sheet 214 and filler; of course, other structures may be further filled or some existing structures may be deleted according to the actual situation. For example, the heat sink and power supply FPC may be filled with an isolation sheet; both the first headband 21 and the second headband 22 may be adjusted to be filled with only the heat sinks; one of the first headband 21 and the second headband 22 may be an ordinary headband with a length adjustment hole; and the structure of the first headband 21 and the second headband 22 may also be adaptively adjusted according to the difference in internal filling.

Understandably, the first headband 21 and the second headband 22 may also be integrated, that is, configured as one headband; for example, one end of the headband is overlapped with the other end, and the middle portion may be connected to the body housing; loosening and tightening of the strap assembly 20 may be accomplished by adjusting the length of the overlapping connection section; in a case that the first headband 21 and the second headband 22 are configured as one headband, other connection methods may also be used, which are not limited herein.

### Second housing assembly 30

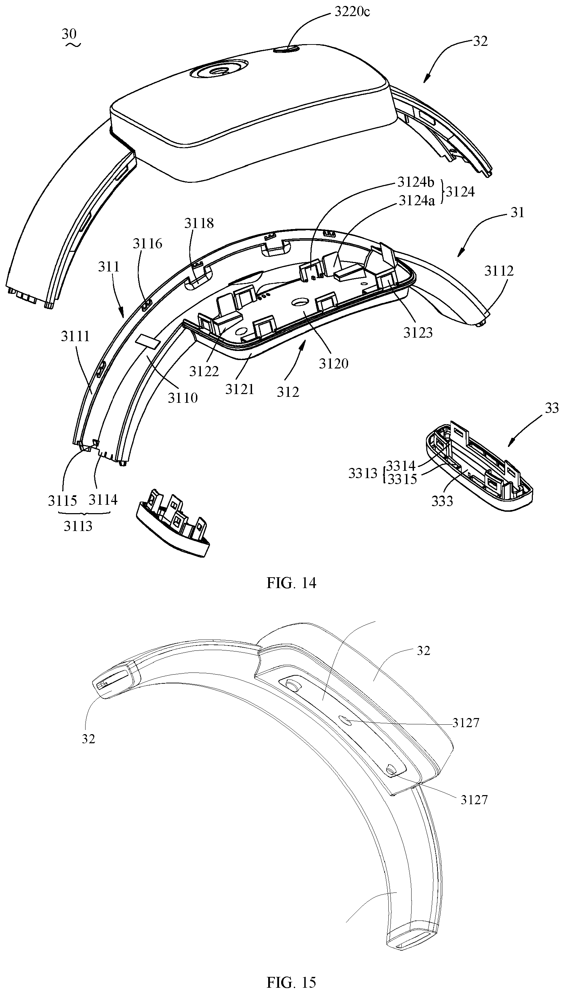

Referring to FIGS. 14 and 15, which are a perspective exploded view and a combined view of the second housing assembly 30, not according to the claimed invention. The second housing assembly 30 may include a bottom front housing 31, a bottom rear housing 32, and a connecting member 33 connected to the front housing 31 and the bottom rear housing 32. The second housing assembly 30 may accommodate the strap assembly 20 and the tightness adjustment mechanism 40.

### Bottom front housing 31 of second housing assembly 30

Referring to FIG. 14, the bottom front housing 31 may be made of a hard material and includes a first channel housing 311 and a first power supply housing 312 extending downwardly from the first channel housing 311.

The first channel housing 311 is strip-shaped and bent as a whole, to match the user's head shape, which is convenient for the user to wear. Inner and outer surfaces of the first channel housing 311 are smooth curved surfaces. The first channel housing 311 includes a body 3110 bent in a strip shape, and a first convex edge 3111 and a second convex edge 3112 that are bent from two long side edges of the body 3110 toward the bottom rear housing 32. The first convex edge 3111 is disposed above the body 3110, and the second convex edge 3112 is disposed below the body 3110.

Opposite ends of the body 3110 are respectively arranged with third fasteners 3113. Each third fasteners 3113 may include a plurality of protrusions 3114 extending outward from an end edge of the body 3110 and a plurality of protruding blocks 3115 adjacent to the end edge. The protruding blocks 3115 may be arranged on a surface facing the bottom rear housing 32; or may be arranged on a surface far away from the bottom rear housing 32.

The first and second convex edges 3111 and 3112 are arranged with first fasteners 3116 on opposite inner sides, and the first fasteners 3116 may be a plurality of evenly arranged protrusions.

An edge of the body 3110 connected with the first convex edge 3111 is defines a plurality of grooves 3118. The grooves 3118 are disposed at the center of a longer edge of the body 3110 and face the first power supply housing 312. The grooves 3118 are configured to avoid corresponding components on the bottom rear housing 32.

The first power supply housing 312 includes a first power supply housing body 3120 extending downward from a middle portion of a long side of the body 3110 where the second convex edge 3112 is located, and a convex edge 3121 bent from an outer edge of the first power supply housing body 3120 to the bottom rear housing 32. That is, there is no second convex edge 3112 arranged at the connection between the first power supply housing body 3120 and the body 3110 of the first channel housing 311, and the second convex edge 3112 is disconnected at the middle position of the long side of the body 3110. Two ends formed by the second convex edge 3112 being disconnected are respectively connected to the convex edge 3121 of the first power supply housing 312.

The first power supply housing body 3120 has a rectangular shape, and the first power supply housing body 3120 is arranged with a compensation structure on a surface facing the bottom rear housing 32. The compensation structure includes four bosses 3122 with gradually changing thicknesses. The four bosses 3122 are distributed at positions close to four corners of the first power supply housing body 3120. Surfaces of the four bosses 3122 facing the bottom rear housing 32 are located on the same plane, for carrying the battery 35 (as shown in FIG. 9).

The first power supply housing body 3120 is arranged with two pairs of first buckle structures 3124 between the two bosses 3122 of the body 3110 closest to the first channel housing 311 and the body 3110, and the two pairs of first buckle structures 3124 include two limiting plates 3124a and two buckle plates 3124b. The two limiting plates 3124a are arranged at intervals. The two buckle plates 3124b are disposed between the two limiting plates 3124a and arranged in a staggered manner. Each buckle plate 3124b is close to a corresponding limiting plate 3124a. The buckle plate 3124b and the adjacent limiting plate 3124a form a pair of first buckle structures 3124, configured for positioning and engaging with corresponding components in the bottom rear housing 32 to separate the first power supply housing 312 and the first channel housing 311.

The lower convex edge 3121 is arranged with a second fastener 3123 facing the bottom rear housing 32. The second fastener 3123 may be a plurality of protruding sheets, and a groove may be defined on a protruding sheet.

Referring to FIG. 15, the first power supply housing body 3120 is arranged with a connecting member 3126 on a side facing the first housing assembly 10. In some embodiments, the connecting member 3126 is two protruding pillars, a through hole 3127 is defined between the two protruding pillars.

### Bottom rear housing 32 of second housing assembly 30

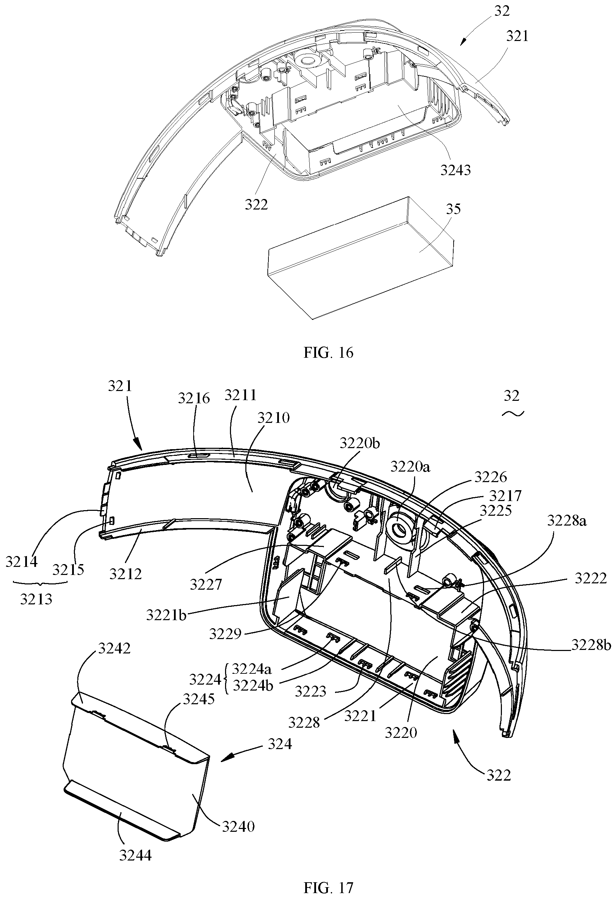

Referring to FIG. 16, the bottom rear housing 32 may be made of a hard material and may include a second channel housing 321 facing the above-mentioned first channel housing 311 and a second power supply housing 322 facing the above-mentioned first power housing 312. The battery 35 is arranged inside the power supply housing 322. The second power supply housing 322 and the battery 35 arranged therein may constitute a power supply assembly.

Referring to FIG. 17, the shape and structure of the second channel housing 321 are substantially similar to that of the first channel housing 311, such that the two can cooperate with each other. The second channel housing 321 has a strip-bent shape. The second channel housing 321 includes a body 3210 bent in a strip shape, and a first convex edge 3211 and a second convex edge 3212 that are bent from two long sides of the body 3210 toward the bottom front housing 31. The first convex edge 3211 is disposed above the body 3210, and the second convex edge 3212 is disposed below the body 3210.

Opposite ends of the body 3210 are respectively arranged with third fasteners 3213. The structure of the third fasteners 3213 is exactly the same as that of the third fasteners 3113 of the first channel housing 311, and each third fastener 3213 includes a plurality of protrusions 3214 and a plurality of protruding blocks 3215, which will not be repeated here. The third fasteners 3113 and 3213 of the first channel housing 311 and the second channel housing 321 are both engaged with the corresponding structure of the connecting member 33 to fix the two ends of the first channel housing 311 and two ends of the second channel housing 321.

The first and second convex edges 3211 and 3212 are arranged with first fasteners 3216 on opposite outer sides. The first fasteners 3216 may be a plurality of evenly arranged grooves to cooperate with the first fasteners 3116 of the first channel housing 311, that is, a plurality of protrusions, thereby snapping together the first channel housing 311 and the second channel housing 321 to form a channel for the strap assembly 20 to pass through.

A hook 3217 is arranged on the first convex edge 3211 at a position corresponding to the groove 3118 on the first convex edge 3111 of the bottom front housing 31 and facing the bottom front housing 31, for buckle with relevant components of the tightness adjustment mechanism 40. Among them, the corresponding groove 3118 on the bottom front housing 31 plays a role of avoiding when the hook 3217 is buckled with the relevant components of the tightness adjustment mechanism 40.

According to the invention, the second power supply housing 322 includes a second power supply housing body 3220 recessed outward from a middle portion of the body 3210 of the second channel housing 321 and extending downward, a side wall 3221 bent and extending from an edge of the second power supply housing body 3220 to the bottom front housing 31, a partition plate 3222 arranged in the second power supply housing 322, and a power supply bracket 324 disposed under the partition plate 3222 and in the second power supply housing 322.

The length of the second power supply housing body 3220 is the same as the length of the first power supply housing body 3120, and the width of the second power supply housing body 3220 is substantially the sum of the width of the first power supply housing body 3120 and the width of the body 3210 of the second channel housing 321.

A perforated boss 3220a is arranged at the center of the second power supply housing body 3220 near the upper side wall 3221. Two symmetrically disposed isolation plates 3225 are arranged on both sides of the perforated boss 3220a, and each isolation plate 3225 defines a notch 3226 toward the bottom front housing 31 to cooperate with the related components of the tightness adjustment mechanism 40.

The second power supply housing body 3220 further defines a through hole 3220b for arranging a power button 3220c (for details, referring to FIG. 14).

The side wall 3221 below the second power supply housing 322 is arranged with a second fastener 3223 at a position close to an edge. The second fastener 3223 is a plurality of protrusions arranged at intervals. The positions of the protrusions correspond to those of the second fasteners 3123 (for example, a number of protrusions) of the first power supply housing 312, such that the second fasteners 3123 of the first power supply housing 312 and the second fasteners 3223 of the second power supply housing 322 engage with each other.

The side wall 3221 below the second power supply housing 322 is further arranged with a buckle structure 3224. The buckle structure 3224 includes two symmetrically arranged protrusions 3224a and a plurality of limiting plates 3224b with gradually changing widths arranged between two protrusions 3224a. The protrusions 3224a are farther away from an outer edge of the lower side wall 3221 than each protrusion of the second fastener 3223.

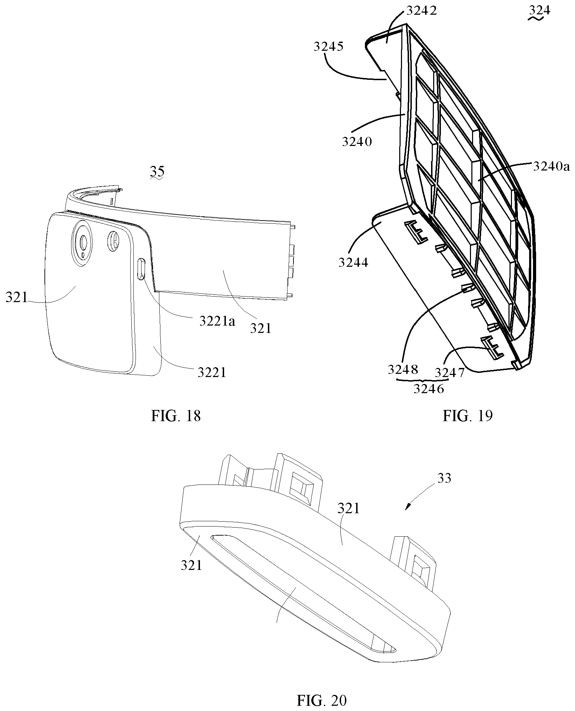

Referring to FIG. 18, one of the side walls 3221 of the second power supply housing 322 adjacent to the second channel housing 321 defines a heat dissipation hole 3221a.

Continuing to refer to FIG. 17, on the side wall 3221 below the second power supply housing 322, two parallel positioning plates 3221b are arranged adjacent to the left and right side walls 3221.

The partition plate 3222 divides the second power supply housing 322 into two chambers. The upper chamber is configured to accommodate the tightness adjustment mechanism 40 and for the strap assembly 20, that is, the first headband 21 and the second headband 22 to pass through. The lower chamber is configured to accommodate the battery 35.

The partition plate 3222 is bent several times to form two bending portions 3227 and a supporting portion 3228 connected to the two bending portions 3227.

The two bending portions 3227 are disposed far from the center of the supporting portion 3228, and the top of the each bending portion 3227 is higher than the supporting portion 3228, such that a space is defined at the bottom of the bending portions 3227 to accommodate the limiting plates 3124a of the first buckle structure 3124 of the bottom front housing 31, and the limiting plates 3124a are in contact with the bottom of the bending portions 3227.

The supporting portion 3228 disposed between two bending portions 3227 is arranged with a first buckle structure 3229 close to the bending portions 3227. The first buckle structure 3229 is two protrusions, and the positions of the two protrusions correspond to those of the two buckle plates 3124b of the first buckle structure 3124 of the first power supply housing 312, such that the first buckle structure 3229 and the buckle plates 3124b are buckled with each other, and the first power supply housing 312 and the partition plate 3222 are buckled together.

Two openings 3228a are defined behind a corresponding position of the supporting portion 3228 and the first buckle structure 3229 to engage with the corresponding structure on the power supply bracket 324.

A supporting rib 3228b is arranged at the center of the supporting portion 3228, which is arranged between the supporting portion 3228 and the second power supply housing body 3220, and is arranged perpendicular to the supporting portion 3228 and the second power supply housing body 3220, respectively, so as to increase the strength of a joint surface of the supporting portion 3228 and the second power supply housing body 3220. The supporting rib 3228b may be further configured to support the tightness adjustment assembly 40.

Referring to FIGS. 17 and 19, the power supply bracket 324 is arranged in the accommodating cavity below the second power supply housing 322, which includes a bracket body 3240 arranged on the second power supply housing body 3210 and a first mounting plate 3242 and a second mounting plate 3244 that are extending from two opposite sides of the bracket body 3240.

A side of the bracket body 3240 facing the second power supply housing body 3210 is arranged with stiffening ribs 3240a that are arranged vertically and horizontally. The height of each stiffening rib 3240a gradually decreases from the center to two sides, such that after the bracket body 3240 and the arc-shaped second power supply housing body 3210 are in contact, a surface of the bracket body 3240 facing the bottom front housing 31 is flat to carry a battery gasket 3243 (as shown in FIG. 16). The length of the battery gasket 3243 is equal to the distance between the two positioning plates 3221b, and also equal to the length of the battery 35. The battery gasket 3243 is arranged on the bracket body 3240, and both ends thereof extend beyond the bracket body 3240 and abut on the two positioning plates 322b so as to stably carry the battery 35.

The first and second mounting plates 3242 and 3244 are relatively arranged in parallel. The first mounting plate 3242 is configured to be arranged on the partition plate 3222, and the second mounting plate 3244 is configured to be arranged on the lower side wall 3221.

An edge of the first mounting plate 3242 is arranged with a buckle portion 3245 corresponding to the opening 3228a defined on the partition plate 3222, and the buckle portion 3245 is buckled into the opening 3228a, such that the first mounting plate 3242 is arranged on the partition plate 3222.

A side of the second mounting plate 3244 facing the lower side wall 3221 is arranged with a buckle structure 3246 that engages with the buckle structure 3224 on the lower side wall 3221. The buckle structure 3246 includes a protrusion 3247 that matches with the protrusion 3224a of the buckle structure 3224 and a limiting plate 3248 that matches with the limiting plate 3224b of the buckle structure 3224.

### Connecting member 33 of second housing assembly 30

Referring to FIGS. 14 and 20, the connecting member 33 may include a connecting member body 331 and a side wall 332 extending from an edge of the connecting member body 331.

As shown in FIG. 14 and FIG. 20, the connecting member body 331 is substantially rectangular in shape, and its corners are rounded. The connecting member body 331 and the four side walls 332 enclose an accommodating chamber 333. A through hole 3310 is defined on the connecting member body 331 for the strap assembly 20 to pass through. The connecting member body 331 is arranged with a fastener 3313 in the accommodating chamber 333. The fastener 3313 may be buckled with the third fastener 3113 of the first channel housing 311 and the third fastener 3213 of the second channel housing 321, respectively. Specifically, the fastener 3313 includes a groove 3315 buckled with the protrusion 3114 of the third fastener 3113, a groove 3315 buckled with the protrusion 3214 of the third fastener 3213, a buckle piece 3314 that corresponds to the protruding block 3115 of the third fastener 3113, and a buckle piece 3314 that corresponds to the protruding block 3215 of the third fastener 3213.

After the bottom front housing 31 and the bottom rear housing 32 are buckled together, the body 3110 of the first channel housing 311 and the body 3210 of the second channel housing 321 form a channel for the strap assembly 20 to extend. After the first power housing 312 and the second power source the housing 322 are matched, the space above the partition plate 3222 may be defined as a first accommodating cavity, and the space below the partition plate 3222 may be defined as a second accommodating cavity. The first accommodating cavity communicates with the channel, and the two may be defined as a first channel. In addition to accommodating the first headband 21 and the second headband 22 that can overlap each other, the first accommodating cavity may further accommodate the tightness adjustment mechanism 40 to adjust the length of the overlapping part of the first headband 21 and the second headband 22, thus the solid part that constitutes the channel and the first accommodating cavity may also be defined as a headband and a tightness adjustment mechanism housing (or a first housing); the second accommodating cavity is configured to accommodate the power supply such as the battery 35, and may be defined as a power supply housing (or a second housing).

It can be understood that after the bottom front housing 31 and the bottom rear housing 32 are buckled together, the first power supply housing 312, the second power supply housing 322, and the body 3110 of the first channel housing 311 may be defined as the first housing; the first channel housing 311 and the second channel housing 321 on both sides of the first housing may be defined as the second housing.

The various names mentioned above, such as: channel, accommodating cavity, first accommodating cavity, second accommodating cavity, first housing, second housing, headband and tightness adjustment mechanism housing, and power supply housing may be adjusted according to the actual situation, and the present disclosure is not limited to the above-mentioned name limitation. The names of similar structures can be interchanged according to actual conditions. For example, the channel may also be called a first accommodating cavity, the original first accommodating cavity may be called a second accommodating cavity, and the original second accommodating cavity may be called a third accommodating cavity. The names of the first housing and the second housing may also be interchanged.

### Tightness adjustment mechanism 40

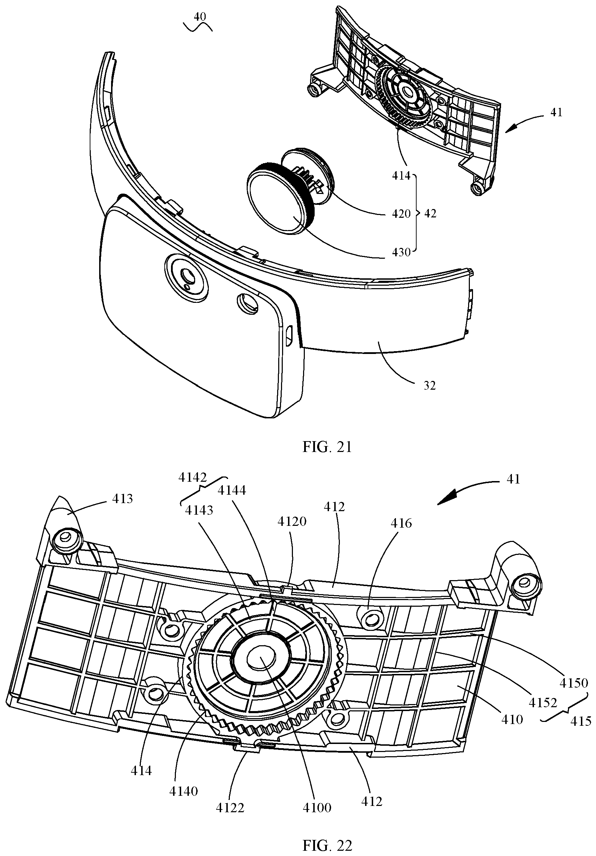

Referring to FIG. 21, which is a perspective exploded view of the tightness adjustment mechanism 40 according to the embodiment of the present disclosure. The tightness adjustment mechanism 40 may include a first housing 41, a second housing that cooperates with the first housing 41 (the second housing herein is the bottom rear housing 32 of the second housing assembly 30 described above; the bottom rear housing 32 may be a component shared by the tightness adjustment mechanism 40 and the second housing assembly 30), and a ratchet and pawl mechanism 42. The first housing 41 and the second housing are buckled to form a box body, and a body of the ratchet and pawl mechanism 42 may be received in the box body. The two headbands (i.e., the first headband 21 and the second headband 22) of the strap assembly 20 may be extended into the box body to overlap and connect to the ratchet and pawl mechanism 42. The length of the first and second headbands 21 and 22 that overlap each other may be adjusted by the ratchet and pawl mechanism 42. The second housing is not an essential part, and the ratchet and pawl mechanism 42 may be arranged on the first housing 41 only to form the tightness adjustment mechanism 40.

### First housing 41 of tightness adjustment mechanism 40

Referring to FIG. 22, which is a perspective view of the first housing 41 from another perspective. The first housing 41 may include a housing bottom plate 410. The housing bottom plate 410 may be a rectangular plate with uniform thickness, and a central hole 4100 is defined at the center thereof.

The housing bottom plate 410 is formed with side plates 412 on two relatively long sides facing the second housing (i.e., the bottom rear housing 32). The height of each side plate 412 gradually decreases from the middle to the two sides such that a surface of the side plate 412 facing the second housing is arc-shaped so as to be in close contact with the second housing. Two ends of one of the side plates 412 is arranged with a first mounting portion 413 facing the second housing and in a columnar shape. The first mounting portion 413 may be arranged with internal threads to fix the first housing 41 to the bottom rear housing 32 with bolts passing through the first mounting portion 413. A first buckle structure 4120 is formed in the middle of the side plate 412 arranged with the first mounting portion 413. In some embodiments, the first buckle structure 4120 is a groove and a convex block formed above the groove, such that the protrusion is disposed on the supporting rib 3228b to support the first housing 41 when the first housing 41 is fixed to the bottom rear housing 32. A second buckle structure 4122 is formed on the other side plate 412 on which the first mounting portion 413 is not formed. In some embodiments, the second buckle structure 4122 is composed of three grooves arranged at intervals and formed in the middle and a convex block formed above the groove, such that the first housing 41 is fixed to the bottom rear housing 32 through the groove and the hook 3217 on the bottom rear housing 32.

The housing bottom plate 410 is arranged with a ring-shaped ratchet 414 on the surface facing the second housing (i.e., the bottom rear housing 32), a reinforcing rib 415 arranged around the ratchet 414, and a second mounting portion 416 distributed on an outer circumference of the ratchet 414.

An inner wall of the ratchet 414 is arranged with internal teeth 4140. The central hole 4100 is arranged coaxially with the ratchet 414. A bottom of the ratchet 414 may be recessed in a direction away from the second housing and is arranged with a rib 4142. The rib 4142 includes a plurality of first ribs 4143 in rounded shape arranged concentrically with the central hole 4100 and a plurality of second ribs 4144 in strip shape intersecting with the first ribs 4143 and diverging around the center of the central hole 4100.

The reinforcing ribs 415 may include a plurality of parallel first reinforcing ribs 4150 extending from an outer peripheral wall of the ratchet 414 and a plurality of parallel second reinforcing ribs 4152 intersecting the first reinforcing ribs 4150. The first reinforcing ribs 4150 extend from the outer peripheral wall of the ratchet 414 to edges of two relatively short sides of the housing bottom plate 410. The height of each first reinforcing rib 4150 gradually decreases from the outer peripheral wall of the ratchet 414 toward the short edge of the housing bottom plate 410 such that the first reinforcing rib 4150 has an overall arc shape toward a top surface of the second housing, so as to be buckled with the bottom rear housing 32. In this way, the first and second headbands 21, 22 extending into the box body are attached to the first reinforcing ribs 4150, such that the first and second headbands 21, 22 will be bent without corners. The second reinforcing ribs 4152 are perpendicular to the first reinforcing ribs 4150, that is, arranged perpendicular to two long sides of the housing bottom plate 410.

### Ratchet and pawl mechanism 42 of tightness adjustment mechanism 40

Referring to FIG. 21, the ratchet and pawl mechanism 42 may include a ratchet 414 formed on the first housing 41, a pawl assembly 420 that cooperates with the ratchet 414 and is received therein, and a knob assembly 430 that is arranged and fixed on the pawl assembly 420, capable of driving the pawl assembly 420 to rotate, and slidably connected to the central hole 4100.

Referring to FIG. 22, the pawl assembly 420 includes a first baffle 421, a second baffle 422 fixedly connected to the first baffle 421, a rotating plate 423 disposed between the first baffle 421 and the second baffle 422, a first pawl 424, a second pawl 425, a first spring 426, and a second spring 427 that are assembled on the second baffle 422, and a gear 428 fixedly arranged on a side of the second baffle 422 away from the first baffle 421.

The first baffle 421 may be a rounded sheet structure with a central hole 4210 defined in the middle. The central hole 4210 is aligned with the central hole 4100 in the ratchet 414 and the central axis of the two is the same. The first baffle 421 is arranged with a first connecting portion 4212 and a second connecting portion 4214 on a side facing the second baffle 422. The second connecting portion 4214 has a prismatic shape, and the first connecting portion 4212 has a cylindrical shape. Outer peripheral walls of the first and second connecting portions 4212 and 4214 are arranged with protruding strips so as to tightly cooperate with the corresponding structure on the second baffle 422, such that the first baffle 421 and the second baffle 422 are fixedly connected.

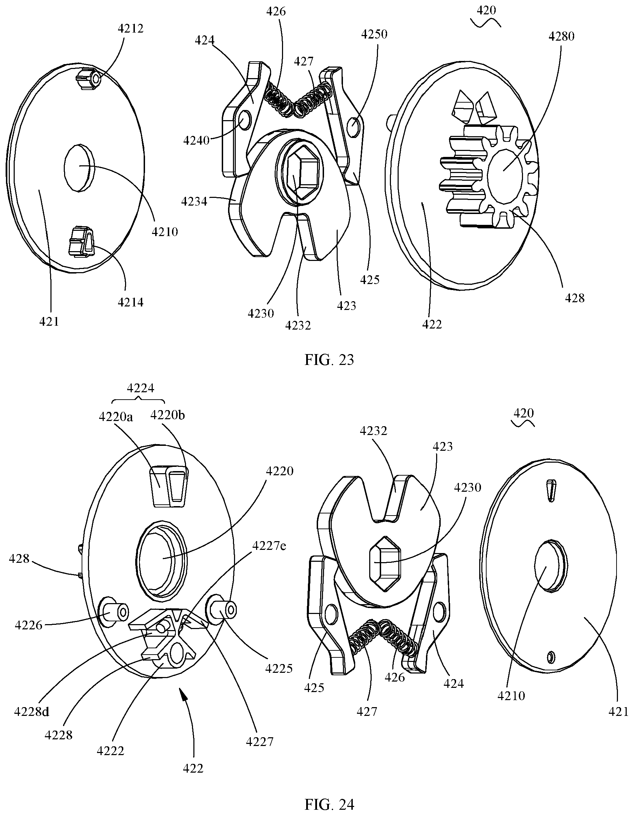

Referring to FIG. 24, the second baffle 422 has the same shape and size as the first baffle 421, and a central hole 4220 is defined in the middle. The central hole 4220 is aligned with the central hole 4210 of the first baffle 421. The second baffle 422 is arranged with a first clamping portion 4222 and a second clamping portion 4224 on a side facing the first baffle 421. The second clamping portion 4224 and the second connecting portion 4214 of the first baffle 421 have the same shape but different sizes, such that the second connecting portion 4214 of the first baffle 421 can be inserted into the second clamping portion 4224. The second clamping portion 4224 includes a first clamping wall 4220a and a second clamping wall 4220b arranged at an angle to the first clamping wall 4220a, that is, the distance between the first clamping wall 4220a and the second clamping wall 4220b gradually increases in an outward direction along the central hole 4220. The first clamping portion 4222 and the first connecting portion 4212 of the first baffle 421 have the same shape but different sizes, such that the first connecting portion 4212 of the first baffle 421 can be inserted into the first clamping portion 4222. A side of the second baffle 422 facing the first baffle 421 is further arranged with a first mounting shaft 4225 for arranging the first pawl 424, a second mounting shaft 4226 for arranging the second pawl 425, a first mounting frame 4227 for arranging the first spring 426, and a second mounting frame 4228 for arranging the second spring 427.

The first baffle 421 and the second baffle 422 may be configured as one mounting member. The second clamping portion 4224 and the second connecting portion 4214 may be configured as a limiting portion to cooperate with the rotating plate 423, or may be configured as a fixing portion to fix the first baffle 421 and the second baffle 422 together; the first clamping portion 4222 and the first connecting portion 4212 may be configured as a fixing portion to fix the first baffle 421 and the second baffle 422 together.

The mounting member is not limited to the assembled form of the first baffle 421 and the second baffle 422. Other forms are possible as long as the first pawl 424 and the second pawl 425 contact and cooperate with the ratchet wheel 414; that is, the mounting member has a notch or a notch-like structure allowing the first pawl 424 and the second pawl 425 to extend out of a space defined by the mounting member to contact and cooperate with the ratchet 414. Therefore, the mounting member may be a box with a notch or a notch-like structure.

Of course, the mounting member may also be only the first baffle 421 or the second baffle 422. For example, the mounting member is the second baffle 422, and the second clamping portion 4224 and the second connecting portion 4214 are formed on the first baffle 421 or the second baffle 422 as a limiting portion.

The first mounting shaft 4225 and the second mounting shaft 4226 are disposed on two sides of the first clamping portion 4222 and are arranged symmetrically with respect to the first clamping portion 4222.

The first mounting frame 4227 and the second mounting frame 4228 are symmetrically arranged with respect to the first clamping portion 4222, and their shapes, sizes, and structures are completely the same.

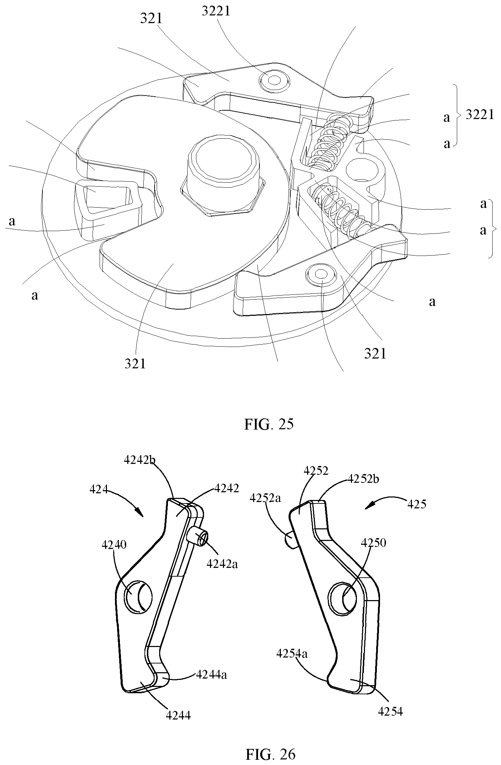

Referring to FIGS. 24 and 25, the first mounting frame 4227 includes a first blocking wall 4227a, a second blocking wall 4227b arranged at an angle with the first blocking wall 4227a, and a connecting wall 4227c connecting an end of the first blocking wall 4227a and an end of the second blocking wall 4227b. The first blocking wall 4227a, the second blocking wall 4227b, and the connecting wall 4227c enclose a receiving space 4227d for receiving the first spring 426. The first blocking wall 4227a extends from an outer peripheral wall of the first clamping portion 4222, and the connecting wall 4227c is arranged with a clamping shaft 4227e facing the receiving space 4227d. The first spring 426 is sleeved on the clamping shaft 4227e.

Since the second mounting frame 4228 has the same structure as the first mounting frame 4227, it will not be described in detail here, and only its components will be listed. The second mounting frame 4228 includes a first blocking wall 4228a, a second blocking wall 4228b, a connecting wall 4228c, a receiving space 4228d, and a clamping shaft 4228e. The first blocking wall 4227a of the first mounting frame 4227 and the first blocking wall 4228a of the second mounting frame 4228 are connected to each other, and an end of the connecting wall 4227c and an end of the connecting wall 4228c are connected to each other.

It should be noted that the first spring 426 and the second spring 427 may be other elastic members, such as tension springs, compression springs, objects that provide telescopic force, etc., such that the first pawl 424, the second pawl 425, and the ratchet 414 cooperate to complete the transition between the two states of engagement and non-engagement. The first mounting frame 4227 and second mounting frame 4228 may also be changed to other structures that can fix the elastic member according to the difference of the elastic member.

The rotating plate 423 is an eccentric wheel structure with a through hole 4230. Of course, the rotating plate 423 may also be integrated with the knob assembly 430 at the through hole 4230. The through hole 4230 is aligned with the central hole 4220 of the second baffle 422 and has the same axis as the central hole 4220. In some embodiments, an inner surface of the through hole 4230 is polygonal, such as a hexagon. An end of the rotating plate 423 away from the through hole 4230 defines a notch 4232. The shape of the notch 4232 is the same as that of the first clamping portion 4222 of the second baffle 422, but the size is different. The size of the notch 4232 is larger than that of the first clamping portion 4222 to receive the first clamping member 4222. Among them, the second clamping portion 4224 and the second connecting portion 4214 are configured as a limiting portion to cooperate with the notch 4232; the notch 4232 has two opposite inner walls, i.e., a first inner wall 4232a and a second inner wall 4232b opposite to the first inner wall 4232a; a peripheral surface of the rotating plate 423 includes an outer wall surface 4234. When the rotating plate 423 rotates around the axis of the through hole 4230, the rotating plate 423 and the second clamping portion 4224 have only three states: a state where only the first inner wall 4232a is in contact with the first clamping wall 4220a, a state where the rotating plate 423 is not in contact with the second clamping portion 4224, and a state where only the second inner wall 4232b is in contact with the second clamping wall 4220b; that is, the limiting portion is configured to be or not to be in contact with the inner wall surface of the notch 4232, enabling the rotating plate 423 to rotate at an angle around its rotation axis (the axis of the through hole 4230).

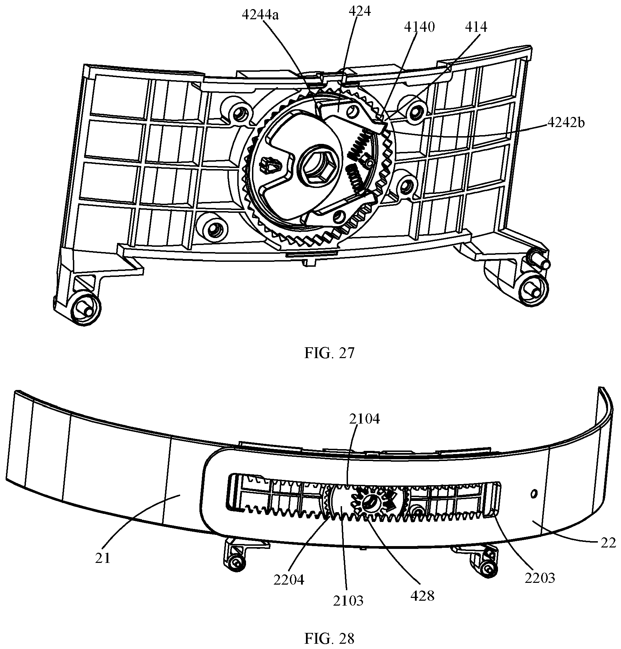

Referring to FIGS. 24 to 26, the first pawl 424 is pivotally arranged on the first mounting shaft 4225 of the second baffle 422 and can rotate around the first mounting shaft 4225. A pivot hole 4240 is defined in the middle of the first pawl 424 to be pivotally connected to the first mounting shaft 4225. The first pawl 424 has two opposite ends, i.e., a first end 4242 connected to the first spring 426 and a second end 4244 abutting against the outer wall 4234 of the rotating plate 423. A side of the first end 4242 facing the receiving space 4227d of the first mounting frame 4227 is arranged with a mounting shaft 4242a, such that the first spring 426 is sleeved and arranged on the mounting shaft 4242a. A side of the first end 4242 facing away from the first mounting frame 4227 is arranged with a corner 4242b, and the corner 4242b is configured to engage with the internal teeth 4140 of the ratchet 414 (referring to FIG. 27). A side of the second end 4244 facing the rotating plate 423 has a contact surface 4244a. In some embodiments, the contact surface 4244a is a curved surface to be in linear contact with the outer wall surface 4234 of the rotating plate 42, thereby reducing the pressure between the two.

The second pawl 425 and the first pawl 424 are arranged symmetrically with respect to the first clamping portion 4222 of the second baffle 422, and they have exactly the same shape and structure, which will not be repeated here, and only its components are listed. The second pawl 425 includes a pivot hole 4250, a first end 4252, a second end 4254, a mounting shaft 4252a, a corner 4252b, and a contact surface 4254a.

During the mounting process of the first spring 426, an end is sleeved on the clamping shaft 4227e in the first mounting frame 4227, and the other end is sleeved on the mounting shaft 4242a of the first pawl 424, such that the first spring 426 is arranged in the first mounting frame 4227. The first pawl 424 can rotate around the first mounting shaft 4225. When the first pawl 424 rotates, the first end 4242 of the first pawl 424 is driven to move, thereby pushing the first spring 426 in the first mounting frame 4227 with varying degrees of compression.

The structure and function of the second spring 427 are exactly the same as the first spring 426, and it is arranged in the second mounting frame 4228, which will not be repeated here.

The outer wall surface 4234 of the rotating plate 423 is a curved surface, and the outer wall surface 4234 is configured such that when the rotating plate 423 rotates around its rotation axis, the outer wall surface 4234 pushes the first and second pawls 424, 425 to rotate, such that the first and second pawls 424, 425 and the ratchet 414 complete the transition between the two states of engagement and non-engagement. Referring to FIG. 25, when no external force is applied to force the rotating plate 423 or the mounting member (the combination of the first baffle 421 and the second baffle 422) to rotate, due to the action of the first spring 426 and the second spring 427, the rotating plate 423 and the outer surface of the limiting portion (that is, the outer surface of the second clamping portion 4224) are in a non-contact state, and the pawl assembly 420 is engaged with the ratchet 414. When an external force intervenes to force the rotating plate 423 to rotate around the axis of the penetration hole 4230, two states occur:

(1) Transition from a non-contact state to a state where only the first inner wall 4232a is in contact with the first card wall 4220a. In this case, in a direction in which the rotating plate 423 rotates around the through hole 4230, a distance from a contact position of the first pawl 424 with the outer wall surface 4234 to the through hole 4230 gradually increases, such that the first end 4242 of the first pawl 424 moves and disengages from the internal teeth 4140 of the inner wall of the ratchet 414; a distance from a contact position of the second pawl 425 with the outer wall surface 4234 to the through hole 4230 gradually decreases, but the ratchet 414 squeezes the second spring 427 of the second pawl 425, such that the second pawl 425 and the internal teeth 4140 of the inner wall of the ratchet 414 are also in a disengaged state. Finally, the pawl assembly 420 and the ratchet 414 are disengaged from the engaged state.

(2) Transition from a non-contact state to a state where only the second inner wall 4232b is in contact with the second card wall 4220b. In this case, in a direction in which the rotating plate 423 rotates around the through hole 4230, a distance from a contact position of the second pawl 425 with the outer wall surface 4234 to the through hole 4230 gradually increases, such that the second end 4254 of the second pawl 425 moves and disengages from the internal teeth 4140 of the inner wall of the ratchet wheel 414; a distance from a contact position of the first pawl 424 with the outer wall surface 4234 to the through hole 4230 gradually decreases, but the ratchet 414 squeezes the first spring 426 of the first pawl 424, such that the first pawl 424 and the internal teeth 4140 of the inner wall of the ratchet 414 are also in a disengaged and locked state. Finally, the pawl assembly 420 and the ratchet wheel 414 are disengaged from the engaged state.

Referring to FIG. 23, the gear 428 defines a central hole 4280 which is aligned with the central hole 4220 of the second baffle 422 and has the same central axis as the central hole 4220. The gear 428 is fixed on a side of the second baffle 422 away from the first baffle 421.

Further referring to FIG. 28, when the strap assembly 20 is connected to the tightness adjustment mechanism 40, an end of the first headband 21 with the length adjustment hole 2103 and an end of the second headband 22 with the length adjustment hole 2203 are stacked. In this case, the first serrations 2104 and the second serrations 2204 are disposed on opposite sides of the two stacked length adjustment holes 2103 and 2203, and the gear 428 is disposed in the stacked two length adjustment holes 2103 and 2203 and engages with the first serrations 2104 and the second serrations 2204.

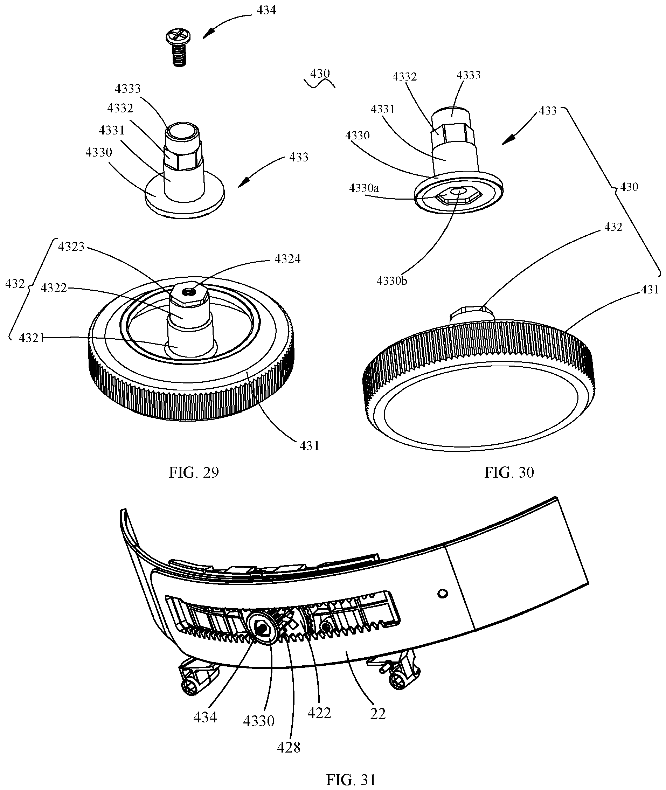

Referring to FIGS. 29 and 30, the knob assembly 430 may include a rotating disk 431, a first transmission shaft 432 extending from an inner surface of the rotating disk 431, and a second transmission shaft 433 arranged on the first transmission shaft 432.

A side surface of the rotating disk 431 may have a rough structure. In some embodiments, an outer surface of the rotating disk 431 defines a plurality of grooves arranged in parallel to form a rib between two adjacent grooves.

The first transmission shaft 432 and the second baffle 422 have the same central axis. The first transmission shaft 432 is sequentially formed with a first connecting shaft 4321, a second connecting shaft 4322, and a third connecting shaft 4323, which are coaxially arranged along a direction of the central axis of the second baffle 422. Both the first connecting shaft 4321 and the second connecting shaft 4322 are round shafts, that is, the outer peripheral surface is circular and the outer diameter of the first connecting shaft 4321 is greater than the outer diameter of the second connecting shaft 4322. The outer peripheral surface of the third connecting shaft 4323 is polygonal, and in some embodiments is a hexagon. A distance between the center of the hexagon and any side of the hexagon is less than the radius of the second connecting shaft 4322. A central hole 4324 is defined in the center of the third connecting shaft 4323, and the central hole 4324 includes internal threads.

The second transmission shaft 433 and the first transmission shaft 432 have the same central axis. The second transmission shaft 433 is sequentially formed with a disk 4330, a first connecting shaft 4331 connected to the disk 4330, a second connecting shaft 4332 connected to the first connecting shaft 4331, and a third connecting shaft 4333 connected to the second connecting shaft 4332, that are coaxially arranged along a direction of the central axis away from the rotating disk 431.

The outer diameter of the disk 4330 is greater than the outer diameter of the first connecting shaft 4331 and greater than the outer diameter of the gear 428. A bottom of the disk 4330 defines a recess 4330a, and a through hole 4330b is defined in the middle of the recess 4330a. An inner wall of the recess 4330a is polygonal, and in some embodiments is hexagonal, so as to cooperate with the third connecting shaft 4323 of the first transmission shaft 432. When the gear 428 is disposed in the two length adjustment holes 2103 and 2203 of the stacked first and second headbands 21 and 22, the disk 4330 cooperates with the gear 428 and the second baffle 422 to positionally limit the first and second headbands 21 and 22, preventing disengagement of the first and second headbands 21 and 22 from engagement with the gear 428.

Both the first connecting shaft 4331 and the third connecting shaft 4333 are round shafts, that is, the outer peripheral surface is rounded and the outer diameter of the first connecting shaft 4331 is greater than the outer diameter of the third connecting shaft 4333. The outer peripheral surface of the second connecting shaft 4332 is polygonal, and in some embodiments is a hexagon. A distance between the center and any side of the hexagon is less than the radius of the first connecting shaft 4331 and greater than the radius of the third connecting shaft 4333. The shape and size of the second connecting shaft 4332 match the shape and size of the through hole 4230 of the rotating plate 423, such that the rotating plate 423 is fixedly connected to the second connecting shaft 4332.

During the assembling process of the strap assembly 20, the second housing assembly 30, and the tightness adjustment mechanism 40, the strap assembly 20 is assembled first, and the first headband 21 and the second headband 22 of the strap assembly 20 are respectively arranged to pass through the through hole 3310 of one connecting member 33; the first transmission shaft 432 of the rotating disk 431 passes through the perforated boss 3220a from the rear of the bottom rear housing 32, and the disk 4330 is arranged on the third connecting shaft 4323; in this way, the second transmission shaft 433 is engaged with the first transmission shaft 432, and a screw 434 is passed through the through hole 4330b at the bottom of the disk 4330 and is threadedly connected with the central hole 4324 of the third connecting shaft 4323 of the first transmission shaft 432; the second transmission shaft 433 and the first transmission shaft 432 are thus firmly connected together.

The position of the length adjustment hole 2103 of the first headband 21 is overlapped with the position of the length adjustment hole 2203 of the second headband 22, and the gear 428 is placed in the length adjustment hole 2103 and the length adjustment hole 2203; the second transmission shaft 433 is passed through the gear 428 and the central hole 4210, and the central hole 4220 of the second baffle 422; the first pawl 424, the second pawl 425, the first spring 426, the second spring 427, the second baffle 422, and the rotating plate 423 are arranged on the second baffle 422. For example, the rotating plate 423 is passed through the third connecting shaft 4333 of the second transmission shaft 433 and sleeved on the second connecting shaft 4332, such that the rotating plate 423 is fixedly arranged relative to the first and second rotating shafts 432, 433. The second clamping portion 4224 on the second baffle 422 is placed in the notch 4232 of the rotating plate 423; the first ends 4242 and 4252 of the first pawl 424 and the second pawl 425 are in contact with the outer wall surface of the outer wall surface 4234 of the rotating plate 423.

The first baffle 421 is buckled with the second baffle 422, and the first connecting portion 4212 on the first baffle 421 is engaged with the first clamping portion 4222 on the second baffle 422, such that the first baffle 421 is assembled on the second transmission shaft 433, and the first baffle 421 is fixedly arranged relative to the second baffle 422, that is, the first baffle 421 can be radially rotated with the second baffle 422 with respect to the second transmission shaft 433; the first pawl 424, the second pawl 425, the first spring 426, the second spring 427, and the rotating plate 423 are fixed between the first baffle 421 and the second baffle 422; the pawl assembly 420 is received in the ratchet 414, and the third connecting shaft 4333 of the second transmission shaft 433 is extended into the central hole 4100 in the ratchet 414 for matching; the first housing 41 is buckled with the bottom rear housing 32; the bottom of the gear 428 abuts against the disk 4330, and the disk 4330 squeezes and limits the first headband 21 and the second headband 22 (referring to FIG. 31); the convex block of the first buckle structure 4120 is placed on the supporting rib 3228b to support the first housing 41; the second buckle structure 4122 is fastened with the hook 3217 of the bottom rear housing 32, and the first mounting portion 413 is fixed to the bottom rear housing 32 with screws; in this way, the first headband 21 and the second headband 22 are fixed inside the tightness adjustment mechanism 40. That is, the assembly of the strap assembly 20 and the tightness adjustment mechanism 40 is completed.

The buckle portion 3245 on the power supply bracket 324 is fastened to the corresponding opening 3228a on the supporting portion 3228; the buckle structure 3246 on the power supply bracket 324 is fastened to the corresponding buckle structure 3224 on the side wall 3221; the battery gasket 3243 is laid on the power supply bracket 324 and the battery 35 is placed; the bottom front housing 31 and the bottom rear housing 32 are assembled; the first fastener 3216 on the bottom rear housing 32 is buckled with the corresponding first fastener 3116 on the first channel housing 311; the second fastener 3223 on the bottom rear housing 32 is buckled with the corresponding second fastener 3123 on the convex edge 3121; the two connecting members 33 are arranged, and the fastener 3313 of the connecting member 33 is buckled with the third fastener 3113 of the bottom front housing 31 and the third fastener 3213 of the bottom rear housing 32 to fix the bottom front housing 31 and the bottom rear housing 32, such that the strap assembly 20 is assembled with the second housing assembly 30 and the tightness adjustment mechanism 40.

During the adjustment process of the strap assembly 20, referring to FIG. 25, in an initial state, the first spring 426 pushes up the first pawl 424, such that the first end 4242 is engaged with the internal teeth 4140 of the ratchet 414; the second spring 427 pushes up the second pawl 425, such that the first end 4252 is engaged with the internal teeth 4140 of the ratchet 414. In this case, the first pawl 424 and the second pawl 425 are in contact with the rotating plate 423, such that the rotating plate 423 and the second clamping portion 4224 are in a non-contact state. The strap assembly 20 acts on the mounting member such that when the mounting member rotates in any direction, there is a pawl that engages with the internal teeth 4140 of the ratchet wheel 414, which makes the limiting portion of the mounting member unable to directly contact with the rotating plate 423; the first baffle 421 is forced from completing its rotation, which in turn snaps on the strap assembly 20 and prevents loosening of the strap assembly 20.

During the length adjustment process of the strap assembly 20 through the knob assembly 430, the knob assembly 430 drives the rotating plate 423 to rotate, such that the non-contact state between the rotating plate 423 and the second clamping portion 4224 is transformed into a state where only the first inner wall 4232a is in contact with the first clamping wall 4220a or a state where only the second inner wall 4232b is in contact with the second clamping wall 4220b. Both states will cause the pawl assembly 420 and the ratchet 414 to disengage from the engaged state, thereby driving the first baffle 421 rotates, and the tightness of the strap assembly 20 is adjusted through the gear 428.

Understandably, the first housing 41 may be the bottom front housing 31 in the second housing assembly 30, and the ratchet 414 may be formed on the body 3110, the central hole 4100 is formed on the body 3110, and the ratchet and pawl mechanism 42 is matched with the ratchet 414; in addition, when the first and second headbands 21, 22 are overlapped and connected to the tightness adjustment mechanism 40, and when the tightness adjustment mechanism 40 adjusts the overlapping length of the first and second headbands 21, 22, the distances from the first and second headband covers 211, 221 to the tightness adjustment mechanism 40 and the headband and to the tightness adjustment mechanism housing will also be adjusted accordingly. Among them, the bottom front housing 31 and the bottom rear housing 32 may form the tightness adjustment mechanism housing as a portion of the tightness adjustment mechanism. Of course, the first housing 41 and the bottom rear housing 32 may form the tightness adjustment mechanism housing.

### Force receiving assembly 50

Referring to FIG. 1, which is a perspective structural view of the head-mounted device 100 according to an embodiment, in which the force receiving assembly 50 includes a first force receiving member 51 arranged on the first housing assembly 10 and a second force receiving member 52 arranged on the second housing assembly 30. In this embodiment, the first housing assembly 10, the strap assembly 20, the second housing assembly 30, and the tightness adjustment mechanism 40 may form a ring frame with adjustable elasticity. The first force receiving member 51 is disposed on a side of the ring frame and the second force receiving member 52 is disposed on the other side of the ring frame, for example, on upper and lower sides of the first housing assembly 10 and the second housing assembly 30 respectively. The first force receiving member 51 is inclined to a side close to the second force receiving member 52. In addition, the first force receiving member 51 is a first force receiving point, the first housing assembly 10 is a second force receiving point, and the second force receiving member 52 is a third force receiving point. The head-mounted device 100 is firmly supported and worn through the first, second, and third force receiving points.

It can be understood that the "first force receiving member" and the "second force receiving member" can also be referred to as "force receiving members", respectively.

### First force member 51 of force assembly 50

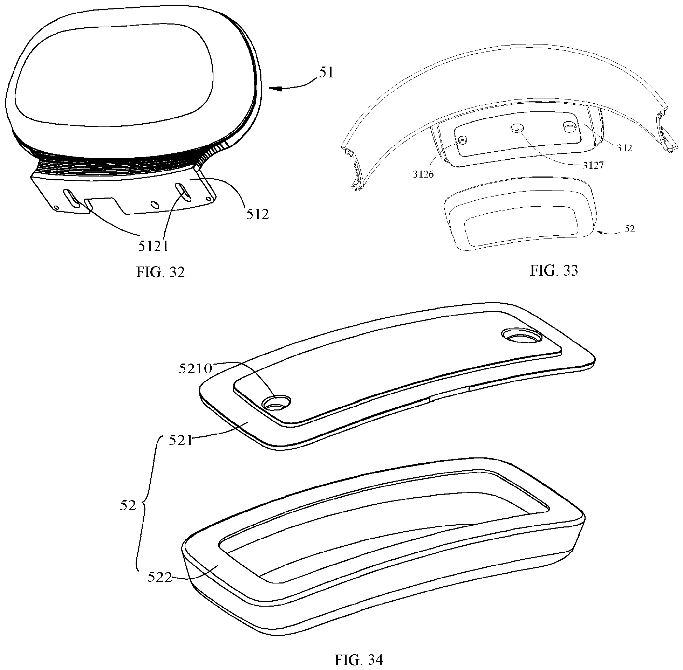

Referring to FIG. 2 and FIG. 32, which are perspective views of the first force receiving member 51 from two different perspectives according to an embodiment. The first force receiving member 51 may include a supporting plate 511, a mounting plate 512 arranged at substantially an angle relative to the supporting plate 511, a neck portion 513 disposed between the supporting plate 511 and the mounting plate 512 and connecting the two, and a soft pad 514 arranged on the supporting plate 511.

The supporting plate 511 may be a quadrangular plate body, and a side of the supporting plate 511 away from the second housing assembly 30 and the soft pad 514 is a curved surface. A side of the supporting plate 511 on which the soft pad 514 is arranged may be a concave curved surface to substantially match the contour of the user's forehead or the upper portion of the forehead. The supporting plate 511 extends from a side of the mounting plate 512 and is inclined to a side where the soft pad 514 is arranged, such that the mounting plate 512 and the supporting plate 511 are arranged at an obtuse angle. The neck portion 513 may have the same extension direction as the support plate 511, that is, the neck portion 513 extends from a side of the mounting plate 512, such that the neck portion 513 and the mounting plate 512 are arranged at an obtuse angle. The neck portion 513 may be bent upward from the mounting plate 512, such that the neck portion 513 and the mounting plate 512 are arranged at a right angle or an acute angle.

The mounting plate 512 is a plate-like structure with a thickness, which is made of a hard material, and is configured to cooperate with the first housing assembly 10 for mounting. The mounting plate 512 defines a strip-shaped adjustable through hole 5121 corresponding to the first housing assembly 10. There may be two adjustable through holes 5121 arranged, and the adjustable through holes 5121 may be parallel to each other. The neck portion 513 is made of a hard material.

The soft pad 514 corresponds to the shape of the supporting plate 511 and is fixed on the supporting plate 511 facing the second housing assembly 30. The soft pad 514 and the mounting plate 512 are disposed on opposite sides of the supporting plate 511, such that the soft pad 514 and the adjustable through hole 5121 are also located on opposite sides of the supporting plate 511.

### Second force receiving member 52 of force receiving assembly 50

Referring to FIG. 33, which is an exploded view of the second force receiving member 52 of the force receiving assembly 50 and the bottom front housing 31 of the second housing assembly 30 according to an embodiment. The second force receiving member 52 is fixedly arranged on the bottom front housing 31 of the second housing assembly 30. Referring to FIG. 34, which is a perspective exploded view and a perspective assembly view of the second force receiving member 52 according to an embodiment. The second force receiving member 52 may include a fixing plate 521 and a soft pad 522 covered on the fixing plate 521.

The shape and size of the fixing plate 521 match the shape and size of the first power supply housing body 3120 of the bottom front housing 31 of the second housing assembly 30, and a mounting hole 5210 is defined on the fixing plate 521 facing the connecting member 3126 on the first power body 3120.

During the mounting process of the second force receiving member 52 on the second housing assembly 30, the soft pad 522 is first sleeved on the fixing plate 521, and the fixing plate 521 is aligned with the connecting member 3126 on the first power supply housing body 3120 such that the connecting member 3126 is firmly inserted into the mounting hole 5210, and further the second force receiving member 52 is firmly mounted on the second housing assembly 30. In some embodiments, the positions of the connecting member 3126 and the mounting hole 5210 may be changed mutually, that is, the mounting hole 5210 is arranged on the second housing assembly 30, and the connecting member 3126 is arranged on the second force receiving member 52. Of course, the present disclosure is not limited to the form of the mounting hole 5210 and the connecting member 3126, and any method that allows the second force receiving member 52 to be arranged on the second housing assembly 30 can be applied, for example, glue bonding.

When the user wears the head-mounted device 100, the strap assembly 20 connects the first housing assembly 10 and the second housing assembly 30 together to form a wearable ring frame, and the second force-receiving member 52 and the first housing assembly 10 are configured as main force receiving points. The first housing assembly 10 is in contact with the user's forehead, and the second force receiving member 52 is in contact with the back of the user's head. The user contacts the head-mounted device 100 for support through the forehead and back of the head. Since the first force receiving member 51 is arranged obliquely on the forehead toward the second force receiving member 52, and is in contact with the portion above the user's forehead, the first force receiving member 51 can stably support the head-mounted device 100, thus allowing the user to wear more comfortably.

The above are some embodiments of the present disclosure. It should be noted that for those skilled in the art, without departing from the principle of the present disclosure, several improvements and modifications can be made, the scope of protection being defined by the appended claims.

## Claims

1. A head-mounted device (100), comprising:
a first housing (3120), defining a first accommodating cavity and a second accommodating cavity that are separated in an upper-lower direction;
two second housings (311, 321); wherein one of the two second housings extends from a side of the first housing, and the other of the two second housings extends from another side of the first housing opposite to the side of the first housing; the two second housings define two third accommodating cavities connected to the first accommodating cavity, one of the two third accommodating cavities disposed on a left side of the first accommodating cavity, the other of the two third accommodating cavities disposed on a right side of the first accommodating cavity; a portion of the first housing on a side with the second accommodating cavity extends beyond the second housing; and
a strap assembly (20), connected to the first housing and comprising a first headband (21) and a second headband (22); wherein an end of the first headband (21) is received in the first accommodating cavity and one of the two third accommodating cavities corresponding to the first headband (21), and the other end of the first headband (21) is disposed outside the first accommodating cavity; an end of the second headband (22) is received in the first accommodating cavity and the other of the two third accommodating cavities, and the other end of the second headband (22) is disposed outside the first accommodating cavity;
**characterized in that**,
the first housing comprises:
a first power supply housing (312); and
a second power supply housing (322), buckled with the first power supply housing (312);
wherein a partition plate (3222) is arranged in the second power supply housing (322) and configured to divide the first accommodating cavity and the second accommodating cavity;
wherein a battery is received in the second accommodating cavity.

2. The head-mounted device (100) according to claim 1, wherein in the first accommodating cavity and the two third accommodating cavities, the first headband (21) and the second headband (22) are overlapped and connected to each other; an overlapped end of the first headband (21) defines a length adjustment hole (2103) and an overlapped end of the second headband (22) defines another length adjustment hole (2203), for adjusting a length of an overlapping portion of the first headband (21) and the second headband (22).

3. The head-mounted device (100) according to claim 1, wherein,
the two second housings comprise:
a first channel housing (311); and
a second channel housing (321), buckled with the first channel housing (311) to form the third accommodating cavity configured to receive the first headband (21) and the second headband (22);
the first power supply housing (312) is arranged extending downwardly from an edge of a side of the first channel housing (311); the second power supply housing (322) is arranged recessed from the second channel housing (321) in a direction away from the first channel housing (311) and extending downwardly.

4. The head-mounted device (100) according to claim 3, wherein a mounting base with a ratchet (414) is arranged on the second power supply housing (322) in the first accommodating cavity.

5. The head-mounted device (100) according to claim 3, wherein each of the first channel housing (311) and the second channel housing (321) comprises: a body (3110, 3210) bent in a strip shape, a first convex edge (3111, 3211) bent from a long side edge of the body (3110, 3210) to a certain side, and a second convex edge (3112, 3212) bent from another long side edge of the body (3110, 3210) to the certain side; an inner side of the first convex edge (3111) and an inner side of the second convex edge (3112) opposite to the inner side of the first convex edge (3111) are each arranged with a first fastener (3116), and an outer side of the first convex edge (3211) and an outer side of the second convex edge (3212) opposite to the outer side of the first convex edge (3211) are each arranged with another first fastener (3216); the first channel housing (311) and the second channel housing (321) are fastened by the first fastener (3116) and the another first fastener (3216) being connected together.

6. The head-mounted device (100) according to claim 5, wherein the first power supply housing (312) comprises:
a first power supply housing body (3120), extending downward from a middle portion of a long side, where the second convex edge (3112) is located, of the body (3110) of the first channel housing (311), and
a convex edge (3121), bent from an outer edge of the first power supply housing body (3120) to a side with the second power supply housing (322);
wherein the second convex edge (3121) is not arranged at a connection between the first power supply housing body (3120) and the body (3110) of the first channel housing (311), and the second convex edge (3121) is disconnected at a middle position of the long side of the body (3110); two ends formed by the second convex edge (3121) being disconnected are respectively connected to the convex edge (3121) of the first power supply housing (312); the convex edge (3121) of the first power supply housing (312) is arranged with a second fastener (3123) to be buckled with the second power supply housing (322).

7. The head-mounted device (100) according to claim 6, wherein the second power supply housing (322) comprises:
a second power supply housing body (3220), recessed from a middle portion of the second channel housing (321) to a side away from the first channel housing (311) and extending downward; and
a side wall (3221), bent from an edge of the second power supply housing body (3220) to the first power supply housing (312) and extending;
wherein the side wall (3221) of the second power supply housing (322) away from the second channel housing (321) is arranged with another second fastener (3223) at a position close to an edge of the side wall (3221), the second fastener (3223) of the side wall (3221) being configured to be buckled with the first power supply housing (312).

8. The head-mounted device (100) according to claim 7, wherein the second fastener (3123) of the first power supply housing (312) is buckled with the second fastener (3223) of the second power supply housing (322); the second fastener (3123) of the first power supply housing (312) is a plurality of protruding sheets, and a groove may be defined on each protruding sheet; the second fastener (3223) of the second power supply housing (322) is a plurality of protrusions arranged at intervals.

9. The head-mounted device (100) according to claim 3, wherein the second channel housing (321) and the first channel housing (311) define the third accommodating cavities on both sides of the first accommodating cavity within the second power supply housing (322).

10. The head-mounted device (100) according to claim 9, wherein the first power supply housing body (3120) is arranged with a first buckle structure (3124) connected to the partition plate (3222);
the partition plate (3222) comprises:
two bending portions (3227), wherein each bending portion (3227) defines a space for receiving the first buckle structure (3124) of the first power supply housing body (3120) and is connected to the first buckle structure (3124) of the first power supply housing body (3120); and
a supporting portion (3228), connected to the two bending portions (3227).

11. The head-mounted device (100) according to claim 2, wherein the first channel housing (311) and the second channel housing (321) are buckled together to form a first assembly, and each end of the first assembly is connected to a connecting member (33), the connecting member (33) comprising:
a connecting member body (331), defining a through hole (3310) communicating with a corresponding third accommodating cavity; and
a side wall (332), extending from an edge of the connecting member body (331); wherein the side wall (332) and the connecting member body (331) enclose an accommodating chamber (333); the first channel housing (311) and the second channel housing (321) are buckled together to form a second assembly, and an end of the second assembly is embedded in the accommodating chamber (333).

12. The head-mounted device (100) according to claim 11, wherein the connecting member body (331) is arranged with a fastener (3313) in the accommodating chamber (333); each end of the first channel housing (311) and each end of the second channel housing (321) are arranged with a third fastener (3113, 3213) connected to a corresponding fastener (3313).

13. The head-mounted device (100) according to claim 2, wherein each of the first headband (21) and the second headband (22) comprises a headband body (210, 220) and a headband cover (211, 221) buckled with the headband body (210, 220);
the headband body (210, 220) comprises a body portion (2101, 2201) and a mounting portion (2102, 2202) extending from an end of the first body portion (2101, 2201); an end of the body portion (2101, 2201) away from the mounting portion (2102, 2202) defines the length adjustment hole (2103, 2203).

14. The head-mounted device (100) according to claim 1, further comprising a host housing (10) facing the first housing and a force receiving member (51); wherein the strap assembly (20) is connected to opposite ends of the host housing (10) and opposite ends of the first housing (10) to form a ring frame; the force receiving member (51) is arranged on the ring frame.

15. The head-mounted device (100) according to claim 14, wherein the force receiving member (51) is connected to the host housing (10) and arranged on a side of the host housing (10); an end of the force receiving member (51) not connected to the host housing (10) is arranged at an angle towards the ring frame.

## Patentansprüche

1. Am Kopf zu tragendes Gerät (100), Folgendes umfassend:
ein erstes Gehäuse (3120), das einen ersten Unterbringungshohlraum und einen zweiten Unterbringungshohlraum definiert, die in einer Oben-Unten-Richtung getrennt sind,
zwei zweite Gehäuse (311, 321), wobei sich eines der zwei zweiten Gehäuse von einer Seite des ersten Gehäuses aus erstreckt und sich das andere der zwei zweiten Gehäuse von der anderen Seite des ersten Gehäuses gegenüber der Seite des ersten Gehäuses aus erstreckt, die zwei zweiten Gehäuse zwei dritte Unterbringungshohlräume definieren, die mit dem ersten Unterbringungshohlraum verbunden sind, einer der zwei dritten Unterbringungshohlräume an einer linken Seite des ersten Unterbringungshohlraums angeordnet ist, das andere der zwei dritten Gehäuse an einer rechten Seite des ersten Unterbringungshohlraums angeordnet ist, sich ein Abschnitt des ersten Gehäuses an einer Seite mit dem zweiten Unterbringungshohlraum über das zweite Gehäuse hinaus erstreckt, und
eine Gurtanordnung (20), die mit dem ersten Gehäuse verbunden ist und ein erstes Kopfband (21) und ein zweites Kopfband (22) umfasst, wobei ein Ende des ersten Kopfbandes (21) in dem ersten Unterbringungshohlraum untergebracht ist und einer der zwei dritten Unterbringungshohlräume dem ersten Kopfband (21) entspricht und das andere Ende des ersten Kopfbandes (21) außerhalb des ersten Unterbringungshohlraums angeordnet ist, ein Ende des zweiten Kopfbandes (22) in dem ersten Unterbringungshohlraum und dem anderen der zwei Unterbringungshohlräume aufgenommen ist und das andere Ende des zweiten Kopfbandes (22) außerhalb des ersten Unterbringungshohlraums angeordnet ist,
**dadurch gekennzeichnet, dass**
das erste Gehäuse Folgendes umfasst:
ein erstes Energieversorgungsgehäuse (312) und ein zweites Energieversorgungsgehäuse (322), das an das erste Energieversorgungsgehäuse (312) geschnallt ist,
wobei in dem zweiten Energieversorgungsgehäuse (322) eine Unterteilungsplatte (3222) angeordnet und dafür gestaltet ist, den ersten Unterbringungshohlraum und den zweiten Unterbringungshohlraum zu trennen,
wobei in dem zweiten Unterbringungshohlraum eine Batterie aufgenommen ist.

2. Am Kopf zu tragendes Gerät (100) nach Anspruch 1, wobei das erste Kopfband (21) und das zweite Kopfband (22) in dem ersten Unterbringungshohlraum und den zwei dritten Unterbringungshohlräumen einander überlappen und miteinander verbunden sind, ein überlappendes Ende des ersten Kopfbandes (21) eine Längeneinstellungsöffnung (2103) definiert und ein überlappendes Ende des zweiten Kopfbandes (22) eine weitere Längeneinstellungsöffnung (2203) definiert, um eine Länge eines überlappenden Abschnitts des ersten Kopfbandes (21) und des zweiten Kopfbandes (22) einzustellen.

3. Am Kopf zu tragendes Gerät (100) nach Anspruch 1, wobei die zwei zweiten Gehäuse Folgendes umfassen:
ein erstes Kanalgehäuse (321) und
ein zweites Kanalgehäuse (321), das an das erste Kanalgehäuse (311) geschnallt ist, um den dritten Unterbringungshohlraum zu bilden, der dafür gestaltet ist, das erste Kopfband (21) und das zweite Kopfband (22) aufzunehmen,
wobei das erste Energieversorgungsgehäuse (312) derart angeordnet ist, dass es sich von einem Rand einer Seite des ersten Kanalgehäuses (311) abwärts erstreckt, das zweite Energieversorgungsgehäuse (322) derart angeordnet ist, dass es zu dem zweiten Kanalgehäuse (321) in einer Richtung weg von dem ersten Kanalgehäuse (311) vertieft ist und sich abwärts erstreckt.

4. Am Kopf zu tragendes Gerät (100) nach Anspruch 3, wobei an dem zweiten Energieversorgungsgehäuse (322) in dem ersten Unterbringungshohlraum eine Montagebasis mit einer Ratsche (414) angeordnet ist.

5. Am Kopf zu tragendes Gerät (100) nach Anspruch 3, wobei das erste Kanalgehäuse (311) und das zweite Kanalgehäuse (321) jeweils Folgendes umfassen: einen Hauptteil (3110, 3210), der in einer Streifenform gebogen ist, einen ersten konvexen Rand (3111, 3211), der von einem Rand der langen Seite des Hauptteils (3110, 3210) zu einer bestimmten Seite gebogen ist, und einen zweiten konvexen Rand (3112, 3212), der von einem anderen Rand der langen Seite des Hauptteils (3110, 3210) zu einer bestimmten Seite gebogen ist, eine Innenseite des ersten konvexen Randes (3111) und eine Innenseite des zweiten konvexen Randes (3112) gegenüber der Innenseite des ersten konvexen Randes (3111) jeweils mit einem ersten Befestigungsmittel (3116) angeordnet sind und eine Außenseite des ersten konvexen Randes (3211) und eine Außenseite des zweiten konvexen Randes (3212) gegenüber der Außenseite des ersten konvexen Randes (3211) jeweils mit einem weiteren ersten Befestigungsmittel (3216) angeordnet sind, das erste Kanalgehäuse (311) und das zweite Kanalgehäuse (321) dadurch befestigt werden, dass das erste Befestigungsmittel (3116) und das weitere erste Befestigungsmittel (3216) miteinander verbunden werden.

6. Am Kopf zu tragendes Gerät (100) nach Anspruch 5, wobei das erste Energieversorgungsgehäuse (312) Folgendes umfasst:
einen Hauptteil (3120) des ersten Energieversorgungsgehäuses, der sich von einem mittleren Abschnitt einer langen Seite, an der sich der zweite konvexe Rand (3112) befindet, des Hauptteils (3110) des ersten Kanalgehäuses (311) abwärts erstreckt, und
einen konvexen Rand (3121), der von einem Außenrand des Hauptteils (3120) des ersten Energieversorgungsgehäuses zu einer Seite mit dem zweiten Energieversorgungsgehäuse (322) gebogen ist,
wobei der zweite konvexe Rand (3121) nicht an einer Verbindung zwischen dem Hauptteil (3120) des ersten Energieversorgungsgehäuses und dem Hauptteil (3110) des ersten Kanalgehäuses (311) angeordnet ist und der zweite konvexe Rand (3121) an einer mittleren Position der langen Seite des Hauptteils (3110) getrennt ist, zwei Enden, die durch den zweiten konvexen Rand (3121) gebildet sind, der getrennt ist, jeweils mit dem konvexen Rand (3121) des ersten Energieversorgungsgehäuses (312) verbunden sind, der konvexe Rand (3121) des ersten Energieversorgungsgehäuses (312) mit einem zweiten Befestigungsmittel (3123) angeordnet ist, um an das zweite Energieversorgungsgehäuse (322) geschnallt zu werden.

7. Am Kopf zu tragendes Gerät (100) nach Anspruch 6, wobei das zweite Energieversorgungsgehäuse (322) Folgendes umfasst:
einen Hauptteil (3220) des zweiten Energieversorgungsgehäuses, der zu einem mittleren Abschnitt des zweiten Kanalgehäuses (321) zu einer Seite, die weg von dem ersten Kanalgehäuse (311) weist, vertieft ist und sich abwärts erstreckt, und
eine Seitenwand (3221), die von einem Rand des Hauptteils (3220) des zweiten Energieversorgungsgehäuses zu dem ersten Energieversorgungsgehäuse (312) gebogen ist und sich erstreckt,
wobei die Seitenwand (3221) des zweiten Energieversorgungsgehäuses (322), die weg von dem zweiten Kanalgehäuse (321) weist, mit einem weiteren zweiten Befestigungsmittel (3223) an einer Position nahe einem Rand der Seitenwand (3221) angeordnet ist, wobei das zweite Befestigungsmittel (3223) der Seitenwand (3221) dafür gestaltet ist, an das erste Energieversorgungsgehäuse (312) geschnallt zu werden.

8. Am Kopf zu tragendes Gerät (100) nach Anspruch 7, wobei das zweite Befestigungsmittel (3123) des ersten Energieversorgungsgehäuses (312) an das zweite Befestigungsmittel (3223) des zweiten Energieversorgungsgehäuses (322) geschnallt ist, das zweite Befestigungsmittel (3123) des ersten Energieversorgungsgehäuses (312) eine Vielzahl hervorstehender Bahnen ist, und an jeder hervorstehenden Bahn eine Rille definiert sein kann, das zweite Befestigungsmittel (3223) des zweiten Energieversorgungsgehäuses (322) eine Vielzahl von Vorsprüngen ist, die in Intervallen angeordnet sind.

9. Am Kopf zu tragendes Gerät (100) nach Anspruch 3, wobei das zweite Kanalgehäuse (321) und das erste Kanalgehäuse (311) die dritten Unterbringungshohlräume an beiden Seiten des ersten Unterbringungshohlraums in dem zweiten Energieversorgungsgehäuse (322) definieren.

10. Am Kopf zu tragendes Gerät (100) nach Anspruch 9, wobei der Hauptteil (3120) des ersten Energieversorgungsgehäuses mit einer ersten Schnallenstruktur (3124) angeordnet ist, die mit der Unterteilungsplatte (3222) verbunden ist,
wobei die Unterteilungsplatte (3222) Folgendes umfasst:
zwei Biegeabschnitte (3227), wobei jeder Biegeabschnitt (3227) einen Raum zur Aufnahme der ersten Schnallenstruktur (3124) des Hauptteils (3120) des ersten Energieversorgungsgehäuses definiert und mit der ersten Schnallenstruktur (3124) des Hauptteils (3120) des ersten Energieversorgungsgehäuses verbunden ist, und
einen Stützabschnitt (3228), der mit den zwei Biegeabschnitten (3227) verbunden ist.

11. Am Kopf zu tragendes Gerät (100) nach Anspruch 2, wobei das erste Kanalgehäuse (311) und das zweite Kanalgehäuse (312) aneinander geschnallt sind, um eine erste Anordnung zu bilden, und jedes Ende der ersten Anordnung mit einem Verbindungselement (33) verbunden ist, wobei das Verbindungselement (33) Folgendes umfasst:
einen Verbindungselementhauptteil (331), der eine Durchgangsöffnung (3310) definiert, die mit einem entsprechenden dritten Unterbringungshohlraum in Verbindung steht, und
eine Seitenwand (332), die sich von einem Rand des Verbindungselementhauptteils (331) aus erstreckt, wobei die Seitenwand (332) und der Verbindungselementhauptteil (331) eine Unterbringungskammer (333) umschließen, das erste Kanalgehäuse (311) und das zweite Kanalgehäuse (321) aneinander geschnallt sind, um eine zweite Anordnung zu bilden und ein Ende der zweiten Anordnung in die Unterbringungskammer (333) eingebettet ist.

12. Am Kopf zu tragendes Gerät (100) nach Anspruch 11, wobei der Verbindungselementhauptteil (331) mit einem Befestigungsmittel (3313) in der Unterbringungskammer (333) angeordnet ist, jedes Ende des ersten Kanalgehäuses (311) und jedes Ende des zweiten Kanalgehäuses (321) mit einem dritten Befestigungsmittel (3113, 3213) angeordnet sind, das mit einem entsprechenden Befestigungsmittel (3313) verbunden ist.

13. Am Kopf zu tragendes Gerät (100) nach Anspruch 2, wobei das erste Kopfband (21) und das zweie Kopfband (22) jeweils einen Kopfbandhauptteil (210, 220) und eine Kopfbandabdeckung (211, 221) umfassen, die an den Kopfbandhauptteil (210, 220) geschnallt ist,
der Kopfbandhauptteil (210, 220) einen Hauptteilabschnitt (2101, 2201) und einen Montageabschnitt (2102, 2202) umfasst, der sich von einem Ende des ersten Hauptteilabschnitts (2101, 2201) erstreckt, ein Ende des Hauptteilabschnitts (2101, 2201), das weg von dem Montageabschnitt (2102), 2202) weist, eine Längeneinstellungsöffnung (2103, 2203) definiert.

14. Am Kopf zu tragendes Gerät (100) nach Anspruch 1, ferner ein Host-Gehäuse (10), das zum ersten Gehäuse weist, und ein Kraftaufnahmeelement (51) umfassend, wobei die Gurtanordnung (20) mit gegenüberliegenden Enden des Host-Gehäuse (10) und gegenüberliegenden Enden des ersten Gehäuses (10) verbunden ist, um ein Ringgestell zu bilden, das Kraftaufnahmeelement (51) an dem Ringgestell angeordnet ist.

15. Am Kopf zu tragendes Gerät (100) nach Anspruch 14, wobei das Kraftaufnahmeelement (51) mit dem Host-Gehäuse (10) verbunden und an einer Seite des Host-Gehäuses (10) angeordnet ist, ein Ende des Kraftaufnahmeelements (51), das nicht mit dem Host-Gehäuse (10) verbunden ist, in einem Winkel zu dem Ringgestell angeordnet ist.

## Revendications

1. Dispositif (100) monté sur la tête, comportant :
un premier boîtier (3120), définissant une première cavité de logement et une deuxième cavité de logement qui sont séparées dans une direction haut-bas ;
deux deuxièmes boîtiers (311, 321) ;
un des deux deuxièmes boîtiers s'étendant à partir d'un côté du premier boîtier, et l'autre des deux deuxièmes boîtiers s'étendant à partir d'un autre côté du premier boîtier opposé au côté du premier boîtier ; les deux deuxièmes boîtiers définissant deux troisièmes cavités de logement reliées à la première cavité de logement, une des deux troisièmes cavités de logement étant disposée sur un côté gauche de la première cavité de logement, l'autre des deux troisièmes cavités de logement étant disposée sur un côté droit de la première cavité de logement ; une partie du premier boîtier d'un côté muni de la deuxième cavité de logement s'étendant au-delà du deuxième boîtier ; et
un ensemble sangle (20), relié au premier boîtier et comportant un premier serre-tête (21) et un deuxième serre-tête (22) ; une extrémité du premier serre-tête (21) étant reçue dans la première cavité de logement et une des deux troisièmes cavités de logement correspondant au premier serre-tête (21), et l'autre extrémité du premier serre-tête (21) étant disposée en dehors de la première cavité de logement ; une extrémité du deuxième serre-tête (22) étant reçue dans la première cavité de logement et l'autre des deux troisièmes cavités de logement, et l'autre extrémité du deuxième serre-tête (22) étant disposée en dehors de la première cavité de logement ;
**caractérisé en ce que**
le premier boîtier comporte :
un premier boîtier (312) d'alimentation électrique ; et un deuxième boîtier (322) d'alimentation électrique, agrafé avec le premier boîtier (312) d'alimentation électrique ;
une plaque (3222) de séparation étant agencée dans le deuxième boîtier (322) d'alimentation électrique et configurée pour partitionner la première cavité de logement et la deuxième cavité de logement ;
une batterie étant reçue dans la deuxième cavité de logement.

2. Dispositif (100) monté sur la tête selon la revendication 1, dans la première cavité de logement et les deux troisièmes cavités de logement, le premier serre-tête (21) et le deuxième serre-tête (22) se chevauchant et étant liés l'un à l'autre ; une extrémité en chevauchement du premier serre-tête (21) définissant un trou (2103) de réglage de longueur et une extrémité en chevauchement du deuxième serre-tête (22) définissant un autre trou (2203) de réglage de longueur, destinés à régler une longueur d'une partie en chevauchement du premier serre-tête (21) et du deuxième serre-tête (22).

3. Dispositif (100) monté sur la tête selon la revendication 1, les deux deuxièmes boîtiers comportant :
un premier boîtier (311) en goulotte ; et
un deuxième boîtier (321) en goulotte, agrafé avec le premier boîtier (311) en goulotte pour former la troisième cavité de logement configurée pour recevoir le premier serre-tête (21) et le deuxième serre-tête (22) ;
le premier boîtier (312) d'alimentation électrique étant agencé de façon à s'étendre vers le bas à partir d'un bord d'un côté du premier boîtier (311) en goulotte ; le deuxième boîtier (322) d'alimentation électrique étant agencé en retrait par rapport au deuxième boîtier (321) en goulotte dans une direction s'éloignant du premier boîtier (311) en goulotte et s'étendant vers le bas.

4. Dispositif (100) monté sur la tête selon la revendication 3, une embase de montage dotée d'un rochet (414) étant agencée sur le deuxième boîtier (322) d'alimentation électrique dans la première cavité de logement.

5. Dispositif (100) monté sur la tête selon la revendication 3, chacun du premier boîtier (311) en goulotte et du deuxième boîtier (321) en goulotte comportant : un corps (3110, 3210) courbé en forme de bande, un premier bord convexe (3111, 3211) courbé à partir d'un bord de grand côté du corps (3110, 3210) vers un certain côté, et un deuxième bord convexe (3112, 3212) courbé à partir d'un autre bord de grand côté du corps (3110, 3210) vers le côté en question ; un côté intérieur du premier bord convexe (3111) et un côté intérieur du deuxième bord convexe (3112) opposé au côté intérieur du premier bord convexe (3111) étant agencés chacun avec une première fixation (3116), et un côté extérieur du premier bord convexe (3211) et un côté extérieur du deuxième bord convexe (3212) opposé au côté extérieur du premier bord convexe (3211) étant agencés chacun avec une autre première fixation (3216) ; le premier boîtier (311) en goulotte et le deuxième boîtier (321) en goulotte sont fixés par le fait que la première fixation (3116) et ladite autre première fixation (3216) soient liées entre elles.

6. Dispositif (100) monté sur la tête selon la revendication 5, le premier boîtier (312) d'alimentation électrique comportant :
un corps (3120) de premier boîtier d'alimentation électrique, s'étendant vers le bas à partir d'une partie médiane d'un grand côté, où le deuxième bord convexe (3112) est situé, du corps (3110) du premier boîtier (311) en goulotte, et
un bord convexe (3121), courbé à partir d'un bord extérieur du corps (3120) de premier boîtier d'alimentation électrique vers un côté muni du deuxième boîtier (322) d'alimentation électrique ;
le deuxième bord convexe (3121) n'étant pas agencé au niveau d'une liaison entre le corps (3120) de premier boîtier d'alimentation électrique et le corps (3110) du premier boîtier (311) en goulotte, et le deuxième bord convexe (3121) étant déconnecté au niveau d'une position médiane du long côté du corps (3110) ; deux extrémités formées par la déconnexion du deuxième bord convexe (3121) étant respectivement liées au bord convexe (3121) du premier boîtier (312) d'alimentation électrique ; le bord convexe (3121) du premier boîtier (312) d'alimentation électrique étant agencé avec une deuxième fixation (3123) pour être agrafé avec le deuxième boîtier (322) d'alimentation électrique.

7. Dispositif (100) monté sur la tête selon la revendication 6, le deuxième boîtier (322) d'alimentation électrique comportant :
un corps (3220) de deuxième boîtier d'alimentation électrique, en retrait par rapport à une partie médiane du deuxième boîtier (321) en goulotte vers un côté à l'écart du premier boîtier (311) en goulotte et s'étendant vers le bas ; et
une paroi latérale (3221), courbée à partir d'un bord du corps (3220) de deuxième boîtier d'alimentation électrique vers le premier boîtier (312) d'alimentation électrique et s'étendant ;
la paroi latérale (3221) du deuxième boîtier (322) d'alimentation électrique à l'écart du deuxième boîtier (321) en goulotte étant agencée avec une autre deuxième fixation (3223) dans une position proche d'un bord de la paroi latérale (3221), la deuxième fixation (3223) de la paroi latérale (3221) étant configurée pour être agrafée avec le premier boîtier (312) d'alimentation électrique.

8. Dispositif (100) monté sur la tête selon la revendication 7, la deuxième fixation (3123) du premier boîtier (312) d'alimentation électrique étant agrafée avec la deuxième fixation (3223) du deuxième boîtier (322) d'alimentation électrique ; la deuxième fixation (3123) du premier boîtier (312) d'alimentation électrique étant une pluralité de feuilles saillantes, et une rainure pouvant être définie sur chaque feuille saillante ; la deuxième fixation (3223) du deuxième boîtier (322) d'alimentation électrique étant une pluralité de protubérances agencées par intervalles.

9. Dispositif (100) monté sur la tête selon la revendication 3, le deuxième boîtier (321) en goulotte et le premier boîtier (311) en goulotte définissant les troisièmes cavités de logement des deux côtés de la première cavité de logement à l'intérieur du deuxième boîtier (322) d'alimentation électrique.

10. Dispositif (100) monté sur la tête selon la revendication 9, le corps (3120) de premier boîtier d'alimentation électrique étant agencé avec une première structure (3124) de boucle liée à la plaque (3222) de séparation ;
la plaque (3222) de séparation comportant :
deux parties (3227) de flexion, chaque partie (3227) de flexion définissant un espace destiné à recevoir la première structure (3124) de boucle du corps (3120) de premier boîtier d'alimentation électrique et étant liée à la première structure (3124) de boucle du corps (3120) de premier boîtier d'alimentation électrique ; et
une partie (3228) de soutien, liée aux deux parties (3227) de flexion.

11. Dispositif (100) monté sur la tête selon la revendication 2, le premier boîtier (311) en goulotte et le deuxième boîtier (321) en goulotte étant agrafés entre eux pour former un premier ensemble, et chaque extrémité du premier ensemble étant liée à un élément (33) de liaison, l'élément (33) de liaison comportant :
un corps (331) d'élément de liaison, définissant un trou débouchant (3310) qui communique avec une troisième cavité de logement correspondante ; et
une paroi latérale (332), s'étendant à partir d'un bord du corps (331) d'élément de liaison ; la paroi latérale (332) et le corps (331) d'élément de liaison délimitant une chambre (333) de logement ; le premier boîtier (311) en goulotte et le deuxième boîtier (321) en goulotte étant agrafés entre eux pour former un deuxième ensemble, et une extrémité du deuxième ensemble étant encastrée dans la chambre (333) de logement.

12. Dispositif (100) monté sur la tête selon la revendication 11, le corps (331) d'élément de liaison étant agencé avec une fixation (3313) dans la chambre (333) de logement ; chaque extrémité du premier boîtier (311) en goulotte et chaque extrémité du deuxième boîtier (321) en goulotte étant agencée avec une troisième fixation (3113, 3213) liée à une fixation (3313) correspondante.

13. Dispositif (100) monté sur la tête selon la revendication 2, chacun du premier serre-tête (21) et du deuxième serre-tête (22) comportant un corps (210, 220) de serre-tête et un couvercle (211, 221) de serre-tête agrafé avec le corps (210, 220) de serre-tête ;
le corps (210, 220) de serre-tête comportant une partie (2101, 2201) de corps et une partie (2102, 2202) de montage s'étendant à partir d'une extrémité de la première partie (2101, 2201) de corps ; une extrémité de la partie (2101, 2201) de corps à l'écart de la partie (2102, 2202) de montage définissant le trou (2103, 2203) de réglage de longueur.

14. Dispositif (100) monté sur la tête selon la revendication 1, comportant en outre un boîtier (10) d'accueil faisant face au premier boîtier et un élément (51) de réception d'efforts ; l'ensemble sangle (20) étant lié à des extrémités opposées du boîtier (10) d'accueil et à des extrémités opposées du premier boîtier (10) pour former une ossature d'anneau ; l'élément (51) de réception d'efforts étant agencé sur l'ossature d'anneau.

15. Dispositif (100) monté sur la tête selon la revendication 14, l'élément (51) de réception d'efforts étant lié au boîtier (10) d'accueil et agencé sur un côté du boîtier (10) d'accueil ; une extrémité de l'élément (51) de réception d'efforts non liée au boîtier (10) d'accueil étant agencé suivant un angle en direction de l'ossature d'anneau.
